# EUROPEAN PATENT APPLICATION

(11) **EP 4 836 169 A1**
(43) Date of publication of application: **04.11.2026**
(21) Application number: 24933706.4
(22) Date of filing: 21.08.2024
(51) Int. Cl.: H01M 50/533, H01M 50/516, H01M 50/528, B23K 20/10

(54) **WELDING HORN, ULTRASONIC WELDING DEVICE, BATTERY CELL, BATTERY, AND ELECTRIC DEVICE**

(30) Priority: 03.04.2024 CN 202420691915 U
(71) Applicant: Contemporary Amperex Technology Co., Limited, Ningde, Fujian 352100 (CN)
(72) Inventor: ZHANG, Jun, Ningde, Fujian 352100 (CN); LUO, Huaen, Ningde, Fujian 352100 (CN); LIN, Wenfa, Ningde, Fujian 352100 (CN); HUANG, Biao, Ningde, Fujian 352100 (CN); YU, Mingxi, Ningde, Fujian 352100 (CN)
(74) Representative: Kraus & Lederer PartGmbB
(86) International application number: PCT/CN2024/113769
(87) International publication number: WO 2025/208778

(57) **Abstract**

A welding horn, an ultrasonic welding device comprising the welding horn, a battery cell processed by the ultrasonic welding device, a battery comprising the battery cell, and an electric device comprising the battery. A welding end (401) of the welding horn (400) is provided with welding teeth (5) and tooth grooves (6), the welding teeth are divided by the tooth grooves into a plurality of tooth portions (51) spaced apart, and the tooth area ratio of the welding end is greater than or equal to 40%. The arrangement of the welding teeth on the welding horn increases the area ratio of a compaction region in ultrasonic welding, so that more contour lines of laser welding imprints fall within the compaction region, mitigating the problem of thermal cracks along the contours of the laser welding imprints.

## Description

### CROSS-REFERENCE TO RELATED APPLICATIONS

The present application claims the priority of the Chinese patent application with the application number 202420691915.0 and filed by China Patent Office on April 03, 2024, the entire contents of which are incorporated herein by reference.

### TECHNICAL FIELD

The present application relates to the technical field of batteries, and especially relates to a welding horn, an ultrasonic welding apparatus, a battery cell, a battery, and an electrical apparatus.

### BACKGROUND

In recent years, new energy vehicles have made significant advancements. In the field of electric vehicles, power batteries, as the sources of power for electric vehicles, play an irreplaceable important role. The power battery includes a plurality of battery cells; and it is needed to improve the reliability of the battery cells.

### SUMMARY

The embodiments of the present application provide a battery cell, a battery, and an electrical apparatus, which can improve the reliability of the battery cell.

In a first aspect, the embodiment of the present application provides a welding horn; a welding end of the welding horn is provided with welding teeth and tooth grooves; the welding teeth are divided by the tooth grooves into a plurality of tooth portions spaced apart, and a tooth area ratio of the welding end is greater than or equal to 40%.

In the above technical solution, the tooth area ratio of the welding end is set to be greater than or equal to 40%, thus the area ratio of a compacted region in an ultrasonic weld mark can be increased, more contour line of the laser weld mark can be within the compacted region, thereby greatly relieving the problem of thermal cracks in the contour of the laser weld mark, and then improving conductive yield and connection strength between a tab portion and a conductive portion, as well as enhancing the reliability of the battery cell.

In some embodiments, the tooth grooves include first linear grooves and second linear grooves, and the first linear grooves and the second linear grooves are arranged in a crossing way; a plurality of first linear grooves are provided and are arranged in parallel; tooth portions are defined between adjacent first linear grooves and second linear grooves; and widths of the first linear grooves and the second linear grooves are smaller than a spacing between adjacent first linear grooves.

In the above technical solution, the welding teeth are divided by the tooth grooves through the linear grooves, the welding teeth are easy to process, and the manufacturing cost can be decreased. Moreover, the area ratio of the tooth grooves can be reduced, the area of the tooth portions defined between the adjacent first second linear groove and second linear groove can be increased, thereby increasing the tooth area of the welding end; and therefore, more contour line of the laser weld mark can be within the compacted region, thus further relieving the problem of thermal cracks in the contour of the laser weld mark, and then improving the conductive yield and connection strength between the tab portion and the conductive portion, as well as enhancing the reliability of the battery cell.

In some embodiments, the spacing between the adjacent first linear grooves is 1.5-2.5 mm.

In the above technical solution, the grip during welding can be improved, thus a greater friction can be provided; and moreover, the tooth area ratio of the welding end can be increased.

In some embodiments, a plurality of second linear grooves are provided and are arranged in parallel, and the tooth portions are defined between the adjacent first linear grooves and adjacent second linear grooves; and the widths of the first linear grooves and the second linear grooves are smaller than the spacing between adjacent second linear grooves.

In the above technical, the plurality of parallel first linear grooves and the plurality of parallel second linear grooves are arranged, and the first linear grooves and the second linear grooves are arranged in a crossing way, so that a plurality of tooth portions can be simply formed, which facilitates the machining of the welding horn. Moreover, the area ratio of the tooth grooves can be decreased, the area of the tooth portions between the adjacent first linear groove and second linear groove can be increased, thereby increasing the tooth area ratio of the welding end; and therefore, more contour line of the laser weld mark can be within the compacted region, thus further relieving the problem of thermal cracks in the contour of the laser weld mark, and then improving the conductive yield and connection strength between the tab portion and the conductive portion, as well as enhancing the reliability of the battery cell.

In some embodiments, the spacing between adjacent second linear grooves is 1.5-2.5 mm.

In the above technical solution, the grip during welding can be improved, thus a greater friction can be provided; and moreover, the tooth area ratio of the welding end can be increased.

In some embodiments, the welding end is elongated; a length direction of the first linear grooves intersects the length direction of the welding end at an acute angle, and the length direction of the second linear grooves is in axial symmetry with the length direction of the first linear grooves along a width direction of the welding end, and the tooth area ratio is 40%-50%.

In the above technical solution, the welding horn is simple in structure and easy to process, and the area occupied by the first linear grooves and second linear grooves is relatively small, so that the tooth area ratio of the welding end can be increased up to 40%-50%; and therefore, more contour line of the laser weld mark can be within the compacted region, thus greatly relieving the problem of thermal cracks in the contour of the laser weld mark, and then improving the conductive yield and connection strength between the tab portion and the conductive portion, as well as enhancing the reliability of the battery cell.

In some embodiments, the length direction of the first linear grooves intersects the length direction of the welding end at 45°, and the tooth portions include first tooth portions defined between adjacent first linear grooves and adjacent second linear grooves; an apex dimension of the first tooth portion in the direction of the spacing between adjacent first linear grooves is 1.6-2 mm; and the apex dimension of the first tooth portion in the direction of the spacing between adjacent second linear grooves is 1.6-2 mm.

In the above technical solution, the first tooth portion has a relatively large area, which helps achieve the tooth area ratio of 40-50% and helps meet grip requirements to provide greater friction. Additionally, the welding horn is simple in structure, easy to process, and low in manufacturing cost.

In some embodiments, the welding end is elongated, the length direction of the first linear grooves is parallel to a width direction of the welding end, and the length direction of the second linear grooves is parallel to the length direction of the welding end, and the tooth area ratio is 50-60%.

In the above technical solution, the welding horn is simple in structure and easy to process; the length direction of the first linear grooves is set to be parallel to the width direction of the welding end and the length direction of the second linear groove is set to be parallel to the length direction of the welding end, such that the tooth area ratio of the welding end can be increased up to 50%-60%; and therefore, more contour line of the laser weld mark can be within the compacted region, thus greatly relieving the problem of thermal cracks in the contour of the laser weld mark, and then improving the conductive yield and connection strength between the tab portion and the conductive portion, as well as enhancing the reliability of the battery cell.

In some embodiments, the toot portions include second tooth portions defined between adjacent first linear grooves and adjacent second linear grooves; the apex dimension of the second tooth portion in the direction of the spacing between the first linear grooves is 1.5-2.4 mm, and the apex dimension of the second tooth portion in the direction of the spacing between the second linear grooves is 1.5-2.4 mm.

In the above technical solution, the second tooth portion has a relatively large area, which helps achieve the tooth area ratio of 50-60% and helps meet grip requirements to provide greater friction. Additionally, the welding horn is simple in structure, easy to process, and low in manufacturing cost.

In some embodiments, the welding end is elongated, the length direction of the first linear grooves is parallel to the width direction of the welding end, the length direction of the second linear grooves is parallel to the length direction of the welding end and is in the center of the width of the welding end, and the tooth area ratio is 60-70%.

In the above technical scheme, the ratio of the tooth grooves can be increased, the tooth area ratio of the welding end can be greatly increased up to 60%-70%; and therefore, more contour line of the laser weld mark can be within the compacted region, thus greatly relieving the problem of thermal cracks in the contour of the laser weld mark, and then improving the conductive yield and connection strength between the tab portion and the conductive portion, as well as enhancing the reliability of the battery cell. Furthermore, since the number of the second linear grooves is relatively small, and the area of the tooth portion defined the adjacent first linear groove and second linear groove is relatively large, the volume of a molten pool of the laser weld mark in the compacted region can be increased, thus air pores in the molten pool can be decreased, thereby improving the current-carrying capacity of the laser weld mark.

In some embodiments, the tooth portions include third tooth portions defined between adjacent first linear grooves and adjacent second linear grooves; the apex dimension of the third tooth portion in the direction of the spacing between the first linear grooves is 2-2.4 mm, and the apex dimension of the third tooth portion in the length direction of the first linear grooves is 3.5-4.5 mm.

In the above technical scheme, the third tooth portion is an elongated tooth portion of which the length direction extends in the width direction of the welding end, and the third tooth portion has a relatively large area, which helps achieve the tooth area ratio of 60-70% and helps meet grip requirements to provide greater friction. Additionally, the welding horn is simple in structure, easy to process, and low in manufacturing cost. If the laser weld mark is configured to be elongated and extend along the length direction of an ultrasonic weld mark, two rows of elongated third tooth portions are arranged at the welding end, thus reducing the volume of the laser weld mark falling into a fluffy region in the width direction of the ultrasonic weld mark, further reducing the air pores in the molten pool and improving the current-carrying capacity of the laser weld mark.

In some embodiments, the widths of the first linear grooves is less than that of the second linear grooves.

In the above technical scheme, if the laser weld mark is configured to be elongated and extend along the length direction of the ultrasonic weld mark, the widths of the first linear grooves is set to be less than those of the second linear grooves, the corresponding fluffy region of the first linear grooves can be narrower, such that the fluffy regions through which two long sides of the contour of the laser weld mark pass can be reduced, thus relieving the problem of cracks in the contour of the laser weld mark.

In some embodiments, the welding end is elongated, and the welding teeth include fourth tooth portions; the length direction of the fourth tooth portions is matched with the length direction of the welding end, and the width direction of the fourth tooth portions is matched with the width direction of the welding end; and a plurality of fourth tooth portions are provided and are arranged at intervals in the width direction of the welding end.

In the above technical solution, the fourth tooth portions are configured to be elongated and matched with the welding end in the length direction, and the plurality of elongated fourth tooth portions are arranged in the width direction of the welding end, such that the area of each fourth tooth portion can be increased, the tooth area ratio of the welding end can be increased, and more contour line of the laser weld mark can be within the compacted region; additionally, if the laser weld mark is configured to be elongated and extend along the length direction of the ultrasonic weld mark, two long edges of the contour of the laser weld mark can be more within the compacted region corresponding to the fourth tooth portions, thereby relieving the problem of cracks in the contour of the laser weld mark.

In some embodiments, two fourth tooth portions are provided and are arranged at an interval along the width direction of the welding end; a ratio of the apex length of the fourth tooth portions in the length direction of the welding end to the length of the welding end is 75%-85%, and ratio of the apex width of the fourth tooth portions in the width direction of the welding end to half the width of the welding end is 75%-85%, and the tooth area ratio is 70%-80%.

In the above technical solution, the area of each fourth tooth portion can be further increased, thus the tooth area ratio of the welding end can be increased up to 70%-80%; therefore, more molten pool of the laser weld mark can be within the compacted region, the air pores in the molten pool can be decreased, and the current-carrying capacity of the laser weld mark can be improved. Furthermore, if the laser weld mark is configured to be elongated and extend along the length direction of the ultrasonic weld mark, two long edges of the contour of the laser weld mark can be within the compacted regions corresponding to the two fourth tooth portions, thereby facilitating the arrangement of the laser weld mark and relieving the problem of cracks in the contour of the laser weld mark.

In some embodiments, each long edge of the fourth tooth portions is provided with a plurality of protrusions arranged at intervals along the length direction of the welding end, and the protrusions protrude toward the width direction of the welding end.

In the above technical solution, each long edge of the fourth tooth portions is uneven, which helps improve grip during welding to provide greater friction so that the fourth tooth portions can compact tab sheets effectively, thereby increasing the compacting rate of the compacted regions corresponding to the fourth tooth portions, and further relieving the problem of cracks in the contour of the laser weld mark.

In some embodiments, the welding teeth also include a plurality of fifth tooth portions arranged between two fourth tooth portions and spaced along the length direction of the welding end; the protrusions on adjacent sides of the two fourth tooth portions are opposite to each other, and two opposite protrusions are arranged between every two adjacent fifth tooth portions; and contour lines of the fourth tooth portions are matched with the contour lines of the fifth tooth portions.

In the above technical solution, the welding end can be further utilized to construct the welding teeth, the areas of the fourth tooth portions and fifth tooth portions can be increased, and the tooth area ratio of the welding end can be increased; if the two long edges of the laser weld mark are correspondingly located in the compacted regions corresponding to the two fourth tooth portions, the laser weld mark can also cover at least part of the compacted regions corresponding to the plurality of fifth tooth portions, thereby increasing the part of the laser weld marks in the compacted region, further relieving the problem of the generation of the air pores in the molten pool of the laser weld mark, and further improving the conductive yield of a converging portion and the conductive portion.

In some embodiments, the welding teeth include a plurality of sixth tooth portions which are spaced at intervals around the two fourth tooth portions, and the contour lines of the fourth tooth portions are matched with the contour lines of the sixth tooth portions.

In the above technical solution, the plurality of sixth tooth portions are arranged around the two fourth tooth portions, and the contour lines of the sixth tooth portions are matched with the contour lines of the fourth tooth portions, namely, protruding positions of the contours of the fourth tooth portions correspond to recessed positions of the contours of the sixth tooth portions, which helps improve grip during welding to provide greater friction; and therefore, the fourth tooth portions can effectively compact the tab sheets, thereby improving the compaction rate of the compacted regions corresponding to the fourth tooth portions, and further relieving the problem of cracks in the contour of the laser weld mark.

In some embodiments, a dimension K1 of the protrusions in the length direction of the welding end is 1.5-2.4 mm, and a dimension K2 of the protrusions in the width direction of the welding end is 0.2-1.2 mm.

In the above technical solution, the dimension of the protrusions is arranged as above, which helps increase the grip during welding to provide greater friction; and therefore, the fourth tooth portions can effectively compact the tab sheets.

In some embodiments, the width of the tooth grooves is 0.2-0.6 mm.

In the above technical solution, the tooth grooves are relatively small in width, so that the ratio of the tooth grooves in the welding end can be reduced, the ratio of the welding teeth can be increased, thereby increasing the ratio of the compacted regions on the converging portion.

In some embodiments, the apex dimension of the toot portions in a normal direction of the adjacent tooth groove is greater than or equal to 1.5 mm.

In the above technical solution, the area of each tooth portion is not too small, which helps improve the compaction rate of the compacted region.

In some embodiments, a tooth height of the tooth portions is less than or equal to 2.5 mm, and a projection spacing between an apex and bottom of each tooth portion is 0.1-0.2 mm.

In the above technical solution, a side surface of the tooth portion has a certain inclination, which helps improve compaction rate and reduce the edge sharpness of the tooth portions so as to relieve the problem of scratching of the tab.

In some embodiments, the edge of the welding end is chamfered, and a chamfering radius is 0.5-2 mm.

In the above technical solution, during ultrasonic welding, the problem that the edge of the welding end scratches the edges of the tab sheets can be relieved, thus facilitating smooth welding and enhancing the reliability and conductivity of the connection between the tab portion and the conductive portion.

In a second aspect, the embodiment of the present application also provides an ultrasonic welding apparatus, which includes a drive cylinder, a welding pad, and the welding horn in any of the above solutions; the drive cylinder is arranged on the side of the welding horn away from the welding pad and is configured to drive the welding horn to move toward the welding pad.

In the above technical solution, since the welding horn according to the embodiment of the present application helps increase the area of the compacted region the ultrasonic weld mark, there is a large compaction area in the weld mark welded by the ultrasonic device, which helps improve the effect of subsequent laser welding between the tab portion and the conductive portion.

In some embodiments, the drive cylinder is a pneumatic cylinder with a diameter greater than 125 mm.

In the above technical solution, the welding pressure can be increased, thereby improving the compaction rate in the compacted region, relieving the problem of thermal cracks in the contour of the laser weld mark, improving the conductive yield and connection strength between the tab portion and the conductive portion, reducing the air pores in the weld pool of the laser weld mark, improving the current-carrying capacity of the laser weld mark, and improving the reliability of the battery cell.

In some embodiments, the diameter of the pneumatic cylinder is 160 mm or 200 mm.

In the above technical solution, the pneumatic cylinder is easy to process and can operate effectively, and moreover, the compaction rate in the compacted region is high, which is conducive to relieving the problem of thermal cracks in the contour of the laser weld mark, improving the conductive yield and connection strength between the tab portion and the conductive portion, reducing the air pores in the weld pool of the laser weld mark, improving the current-carrying capacity of the laser weld mark, and improving the reliability of the battery cell.

In a third aspect, the embodiment of the present application also provides a battery cell, which includes a case component, a terminal post component, and an electrode assembly; the terminal post component is arranged in the case component and includes the conductive portion; the electrode assembly is accommodated in the case component and includes the tab portion; the tab portion consists of plurality of stacked tab sheets which are connected to form the converging portion; the converging portion overlaps with and connects to the conductive portion to form a connecting portion; the converging portion includes a compacted region, the thickness of the compacted region is less than a stacked thickness of the plurality of tab sheets in the tab portion; the connecting portion includes a first portion formed on the converging portion; most of the contour line of the first portion is within the compacted region; and the converging portion is processed by the ultrasonic welding apparatus in any of the above schemes, and the compacted region is machined through the welding teeth.

In the above technical solution, since at least part of the contour line of the connecting portion formed on the converging portion is within in the compacted region, the plurality of layers of tab sheets in the compacted region are tightly bonded together, the problem of thermal cracks in the contour of the connecting portion can be relieved, thus improving the conductive yield and connection strength between the tab portion and the conductive portion, as well as enhancing the current-carrying capacity and reliability of the battery cell.

In some embodiments, the connecting portion extends from an outer surface of the converging portion to the conductive portion; the first portion includes a surface portion formed on the outer surface of the converging portion, and more than 60% of the contour line of the surface portion is within the compacted region.

In the above technical solution, the connecting portion extends from the converging portion to the conductive portion, thus the welding horn can be conveniently aligned with the converging portion, a welding track can be reasonably designed for the welding horn based on the distribution of the compacted region and the fluffy region on the converging portion, and it can be accurately welded along the welding track, such that at least most of the contour line of the connecting portion formed on the converging portion can be reliably within the compacted region, thereby effectively improving the conductive yield and connection strength between the tab portion and the conductive portion, as well as enhancing the current-carrying capacity and reliability of the battery cell. Moreover, more than 60% of the contour line of the surface portion is within the compacted region, so that the problem of cracks in the contour of a weld joint of the connecting portion on the surface of the converging portion can be further relieved. Additionally, since the connecting portion extends from the outer surface of the converging portion to the conductive portion, the contour line of an internal portion can extend from the contour line of the surface portion to the conductive portion; and if more than 60% of the contour line of the surface portion is within the compacted region, the ratio of the contour line of the inner portion in the compacted region compared to the fluffy region can be further increased, thereby further relieving the problem of crack in the contour line of the first portion of the connecting portion formed on the converging portion.

In some embodiments, the compaction rate of the compacted region is greater than or equal to 6%.

In the above technical solution, the compaction rate of the compacted region is set to be at least 6%, thus interlayer gaps in the compacted region can be reduced, the portion of the connecting portion in the compacted region is greatly prevented from cracks and air pores, the overall current-carrying capacity of the connecting portion can be improved, and the reliability of the connecting portion connecting the conductive portion with the converging portion as well as the conductive yield can be improved.

In some embodiments, the compaction rate of the compacted region is greater than or equal to 12%.

In the above technical solution, the compaction rate of the compacted region is set to be at least 12%, so that the gaps in the compacted region can be further reduced, and the gaps in the compacted region are almost eliminated; therefore, the portion of the connecting portion in the compacted region is greatly prevented from cracks and air pores, the overall current-carrying capacity of the connecting portion can be improved, and the reliability of the connecting portion connecting the conductive portion with the converging portion as well as the conductive yield can be improved.

In a fourth aspect, the embodiment of the present application also provide a battery, which includes the battery cell in any of the above solutions.

In the above technical solution, since the reliability of the battery cell according to the embodiment of the present application is improved, the overall reliability of the battery can be improved.

In a fifth aspect, the embodiment of the present application also provides an electrical apparatus, which includes the battery in any of the above solutions.

In the above technical solution, since the reliability of the battery is improved, the electrical operating performance of the electrical apparatus can be improved.

### BRIEF DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle according to some embodiments of the present application;
FIG. 2 is an exploded structural diagram of a battery provided by some embodiments of the present application;
FIG. 3 is a three-dimensional diagram of a battery cell provided by some embodiments of the present application;
FIG. 4 is a top view of a battery cell provided by some embodiments of the present application;
FIG. 5 is a section view along a line A-A in FIG. 4.
FIG. 6 is a partial enlarged view of B in FIG. 5.
FIG. 7 is a partial sectional view of welding between a tab portion and a conductive portion provided by some embodiments of the present application;
FIG. 8 is a schematic diagram of ultrasonic pre-welding of a tab portion by an ultrasonic welding apparatus provided by some embodiments of the present application;
FIG. 9 is a partial enlarged view of C in FIG. 8;
FIG. 10 is a partial sectional view of welding between a tab portion and a conductive portion provided by some embodiments of the present application;
FIG. 11 is a partial sectional view of welding between a tab portion and a conductive portion provided by some embodiments of the present application;
FIG. 12 is a partial schematic diagram of a welding horn provided by some embodiments of the present application;
FIG. 13 is a schematic diagram of a welding end of a welding horn provided by some embodiments of the present application;
FIG. 14 is a schematic diagram of a welding end of a welding horn provided by other embodiments of the present application;
FIG. 15 is a schematic diagram of a welding end of a welding horn provided by some embodiments of the present application;
FIG. 16 is a schematic diagram of a welding end of a welding horn provided by some embodiments of the present application;
FIG. 17 is a schematic diagram of welding between a converging portion and a conductive portion provided by some embodiments of the present application;
FIG. 18 is a front view of an ultrasonic welding apparatus provided by some embodiments of the present application;
FIG. 19 is a left view of an ultrasonic welding apparatus shown in FIG. 18;
FIG. 20 is a partial cross-sectional topography of a converging portion in a Contrast Example 1;
FIG. 21 is a partial cross-sectional morphology of a converging portion and a conductive portion after laser welding in a Contrast Example 1;
FIG. 22 is a partial cross-sectional topography of a converging portion in a Contrast Example 2;
FIG. 23 is a partial cross-sectional morphology of a converging portion and a conductive portion after laser welding in a Contrast Example 2;
FIG. 24 is a partial cross-sectional topography of a converging portion in a Contrast Example 3;
FIG. 25 is a partial cross-sectional morphology of a converging portion and a conductive portion after laser welding in a Contrast Example 3;
FIG. 26 shows a partial cross-sectional morphology of a converging portion in an Example 1;
FIG. 27 shows a partial cross-sectional morphology of a converging portion and a conductive portion after laser welding in an Example 1;
FIG. 28 shows a partial cross-sectional morphology of a converging portion in an Example 2;
FIG. 29 shows a partial cross-sectional morphology of a converging portion and a conductive portion after laser welding in an Example 2;
FIG. 30 is a partial cross-sectional morphology of a converging portion in an Example 3;
FIG. 31 is a partial cross-sectional morphology of a converging portion and a conductive portion after laser welding in an Example 3;
FIG. 32 is a partial cross-sectional morphology of a converging portion in an Example 4;
FIG. 33 is a partial cross-sectional morphology of a converging portion and a conductive portion after laser welding in an Example 4;
FIG. 34 is a morphology of an ultrasonic weld mark processed by a welding horn in FIG. 13;
FIG. 35 is a cross-sectional morphology of an ultrasonic weld mark in FIG. 34;
FIG. 36 is a morphology of an ultrasonic weld mark processed by a welding horn in FIG. 14;
FIG. 37 is a cross-sectional morphology of an ultrasonic weld mark in FIG. 36;
FIG. 38 is a morphology of an ultrasonic weld mark processed by a welding horn in FIG. 15;
FIG. 39 is a cross-sectional morphology of an ultrasonic weld mark in FIG. 38;
FIG. 40 is a morphology of an ultrasonic weld mark processed by a welding horn in FIG. 16;
FIG. 41 is a cross-sectional morphology of an ultrasonic weld mark in FIG. 40.

Reference numerals:
1000, vehicle;
100, battery; 200, controller; 300, motor;
101, box; 1011, first box body; 1012, second box body;
102, battery cell; X, first direction; Y, second direction; Z, third direction;
E, fourth direction; F, fifth direction; M, sixth direction; N, seventh direction;
1, case component; 11, first case wall; 12, accommodating cavity;
2, terminal post component; 20, conducive portion; 21, terminal post body;
3, electrode assembly; 31, active substance coating part; 32, tab portion; 320, tab sheet;
321, converging portion; 3211, compacted region; 3212, fluffy region;
4, connecting portion; 41, first portion; 411, surface portion; 4x, contour line of surface portion 411;
4x1, long edge of surface portion; 4x2, short edge of surface portion;
412, inner portion; 4y, contour line of inner portion 412; 42, second portion;
4a, first connecting portion; 4b, second connecting portion; 4c, third connecting portion;
2000, ultrasonic welding apparatus;
400, welding horn; 401, welding end; 5, welding tooth; 51, tooth portion;
511, first tooth portion; 512, second tooth portion; 513, third tooth portion;
514, fourth tooth portion; 5141, protrusion; 515, fifth tooth portion; 516, sixth tooth portion;
5161, first sub-tooth; 5162, second sub-tooth;
6, tooth groove; 61, first linear groove; 62, second linear groove;
63, first separation groove; 64, second separation groove;
500, welding pad; and 600, drive cylinder.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module comprising one or more battery cells to provide higher voltage and capacity. For example, the batteries mentioned in the present application may include a battery module or a battery pack. The battery module generally includes a plurality of battery cells. The battery pack generally includes a box body for packaging one or more battery cells or one or more battery modules. The box can avoid liquids or other foreign objects affecting the charging or discharging of the battery cell.

The battery cell includes a case, an electrode assembly, and an electrolyte solution; and the case is configured to accommodate the electrode assembly and electrolyte solution. At least one electrode assembly is accommodated in the case, and is formed by a positive electrode plate, a negative electrode plate, and a separator; and the electrode assembly can be of a winding structure or a laminating structure. The battery cell mainly works by metal ions moving between the positive electrode plate and the negative electrode plate.

The positive electrode sheet usually may include a positive electrode current collector and a positive electrode active material layer. The positive electrode active material layer directly or indirectly coats the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive electrode tab. Taking a lithium-ion battery as an example, the positive electrode current collector may be made of aluminum, and the positive electrode active material layer may be made of lithium cobalt oxide, lithium iron phosphate, ternary lithium or lithium manganate or the like.

The negative electrode sheet usually may include a negative electrode current collector and a negative electrode active material layer. The negative electrode active material layer directly or indirectly coats the negative electrode current collector, the part of the negative electrode current collector not coated with the negative electrode active material layer protrudes from the part of the negative electrode current collector already coated with the negative electrode active material layer, and the part of the negative electrode current collector not coated with the negative electrode active material layer serves as a negative electrode tab. The material of the negative current collector may be copper, and the material of the negative electrode active material layer may be carbon or silicon and the like.

In order to ensure that high current can flow through without fusing; a plurality of positive electrode tab sheets are laminated to form a tab portion of a positive electrode, and a plurality of negative electrode tab sheets are laminated to form a tab portion of a negative electrode. A terminal post is arranged on the case, the tab portion of the positive electrode is electrically connected to a terminal post component of the positive electrode, and the tab portion of the negative electrode is electrically connected to the terminal post component of the negative electrode.

In related technology, an ultrasonic welding method is carried out to connect a plurality of tab sheets in a tab portion to form an ultrasonic weld mark; then, a laser welding method is carried out to weld the ultrasonic weld mark to a conductive portion of an electrode post component, thus achieving connection and electrical conduction between an electrode assembly and the post component. However, there is a problem of development of a thermal cracks in a contour of a laser weld joint, which affects the conductive yield and connection strength between the tab portion and the conductive portion, resulting in influence on the reliability of a battery cell.

The embodiment of the present application provides a welding horn 400; a welding end of the welding horn 400 is provided with welding teeth and tooth grooves; the welding teeth are divided by the tooth grooves into a plurality of tooth portions spaced apart, and a tooth area ratio of the welding end is greater than or equal to 40%. The tooth area ratio of the welding end is set to be greater than or equal to 40%, thus the area ratio of a compacted region in an ultrasonic weld mark can be increased, more contour of the laser weld joint can be within the compacted region; the plurality of layers of tab sheets in the compacted region can be tightly bonded together, thus the problem of thermal cracks in the contour of the laser weld joint can be relieved, thereby improving the conductive yield and connection strength between the tab portion and the conductive portion, as well as enhancing the reliability of the battery cell.

An embodiment of the present application provides an electrical device that uses a battery as a power source, and the electrical device may be but not limited to a mobile phone, a tablet personal computer, a laptop computer, an electric toy, an electric tool, a battery car, an electric vehicle, a ship, a spacecraft, and the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

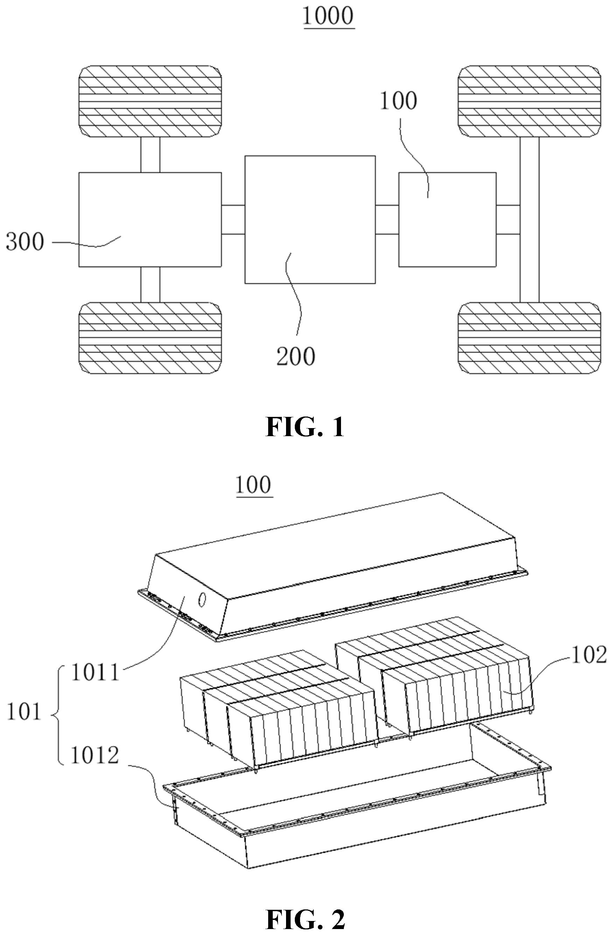

Referring to FIG. 1, FIG. 1 is a schematic structural view of a vehicle 1000 according to some embodiments of the present application. The vehicle 1000 may be a fuel vehicle, a gas vehicle, or a new energy vehicle, and the new energy vehicle may be an all-electric vehicle, a hybrid vehicle, an extended range electric vehicle, or the like. A battery 100 is provided inside the vehicle 1000, and the battery 100 may be disposed at a bottom, or head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is used to control the battery 100 to supply power to the motor 300, for example, to supply power for starting, navigation and driving of the vehicle 1000.

In some embodiments of the present application, the battery 100 may not only be used as the operating power source for the vehicle 1000, but also as a driving power source for the vehicle 1000, to replace or partially replace fuel or natural gas to provide driving power for the vehicle 1000.

With reference to FIG. 2, FIG. 2 is an exploded structural diagram of a battery 100 provided by some embodiments of the present application. The battery 100 includes a box body 101 and a plurality of battery cells 102, and the battery cells 102 are accommodated in the box body 101. The box body 101 is configured to provide an assembling space for the battery cells 102, and the box body 101 can be of various structures. In some embodiments, the box body 101 can include a first box body 1011 and a second box body 1012 which are mutually covered and jointly define the assembling space for accommodating the battery cells 102. The second box body 1012 can be of a hollow structure with one end opened; the first box body 1011 can be of a plate-shaped cover structure, and covers the open side of the second box body 1012, so that the first box body 1011 and the second box body 1012 jointly define the assembling space; each of the first box body 1011 and the second box body 1012 can also be of a hollow structure with one side opened; and the open side of the first box body 1011 covers the open side of the second box body 1012. Definitely, the box body 101 formed by the first box body 1011 and the second box body 1012 can be in various shapes, such as a cylinder and a cuboid.

In the battery 100, the plurality of battery cells 102 can be connected in series or in parallel or in series-parallel, and the series-parallel connection refers to that the plurality of battery cells 102 are connected in series and in parallel. The plurality of battery cells 102 can be directly connected in series or in parallel or in series-parallel, and then the whole body formed by the plurality of battery cells 102 is accommodated in the box body 101; and definitely, the battery 100 can also be that the plurality of battery cells 102 are connected in series or in parallel or in series-parallel to obtain a battery module form, and then a plurality of battery modules are connected in series or in parallel or in series-parallel to form the whole body that is accommodated in the box body 101. The battery 100 can also include other structures, for example, the battery 100 can also include a bus part for realizing electric welding among the plurality of battery cells 102.

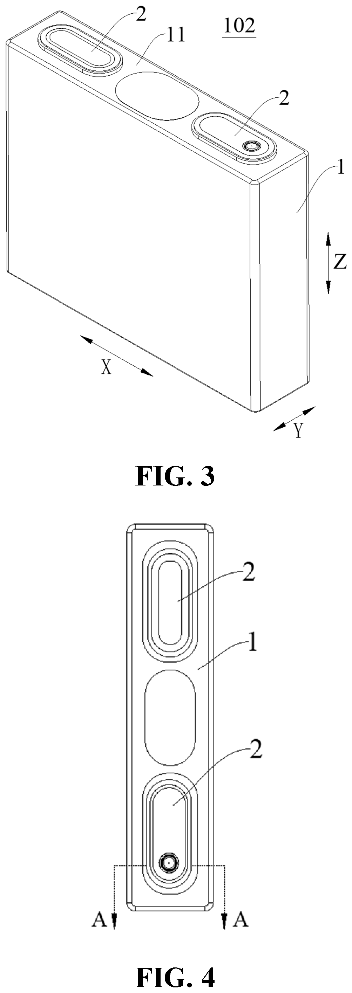

Each battery cell 102 can be a secondary battery or a primary battery, and can also be a lithium-sulfur battery, a sodium-ion battery or a magnesium-ion battery, but not limited thereto. The battery cell 102 can be cylindrical, flat, rectangular, or other shapes. For example, with reference to the embodiment shown in FIG. 3, a length direction of the battery cell 102 is a first direction X, a width direction of the battery cell 102 is a second direction Y, a height direction of the battery cell 102 is a third direction Z, and the first direction X, the second direction Y and the third direction Z are mutually perpendicular in pairs.

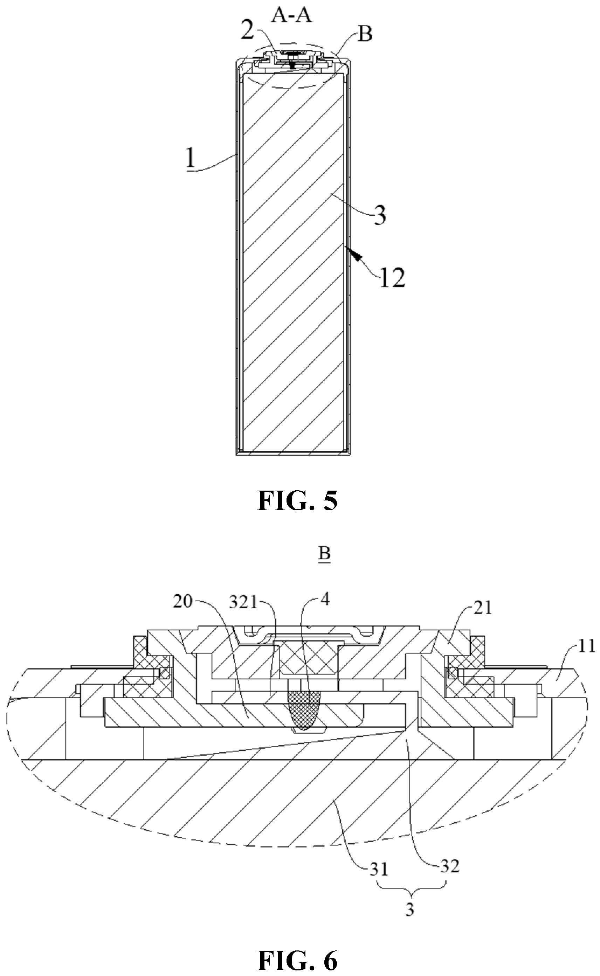

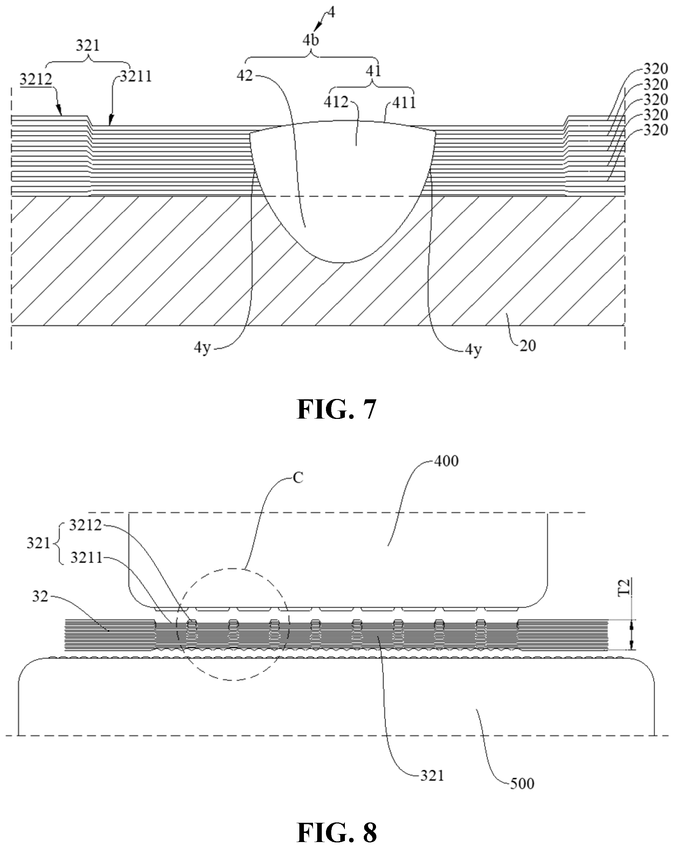

With reference to FIG. 3 to FIG. 7, FIG. 3 is a three-dimensional diagram of a battery cell 102 provided by some embodiments of the present application, FIG. 4 is a top view of a battery cell 102 shown in FIG. 3, FIG. 5 is a sectional view of a line A-A in FIG. 4, FIG. 6 is a partially enlarged view of B in FIG. 5, and FIG. 7 is a partial sectional view of welding between a tab portion 20 and a conductive portion 321 provided by some embodiments of the present application. In some embodiments of the present application, the battery cell 102 includes a case component 1, a terminal post component 2, and an electrode assembly 3; the terminal post component 2 is arranged at the case component 1 and includes a conductive portion 20; the electrode assembly 3 is accommodated in the case component 1 and includes a tab portion 32; the tab portion 32 comprises a plurality of stacked tab sheets 320 which are connected to form a converging portion 321; and the converging portion 321 is stacked on and connected to the conductive portion 20 to form a connecting portion 4.

By way of example, as shown in FIG. 3 to FIG. 6, the case component 1 can include a first case wall 11, and the terminal post component 2 is arranged on the first case wall 11. The structure of case component 1 is not limited. For example, the case component 1 can include a case body and a lid, the case body is defined as a cavity with one end closed and the other end open; the lid is arranged at the open end of the case body and can serve as the first case wall 11, or a wall surface of the end of the case body opposite to the lid can also serve as the first case wall 11. For another example, the case component 1 can include two half cases arranged in pairs, each half case is defined as a cavity that is opened toward the other half case, and the wall surface of the end of one half case away from the other half case serves as the first case wall 11.

As shown in FIG. 5 and FIG. 6, the terminal post component 2 includes the conductive portion 20, and the conductive portion 20 is a portion connected to the electrode assembly 3, for example, the conductive portion 20 can be a terminal post body 21, and in this case, the converging portion 321 formed by connecting the tab sheets 320 in the electrode assembly 3 is directly electrically connected to the terminal post body 21; for another example, the conductive portion 20 can also be an adapter sheet connected to the terminal post body 21, and in this case, the converging portion 321 formed by connecting the tab sheets 320 in the electrode assembly 3 is directly electrically connected to the adapter plate, and the adapter plate is electrically connected to the terminal post body 21, such that the converging portion 321 is indirectly connected to the terminal post body 21 through the adapter sheet. To simplify the description, the conductive portion 20 being the terminal post body 21 is taken as an example for description below.

As shown in FIG. 5 and FIG. 6, the electrode assembly 3 includes an active substance coating part 31 accommodated inside the case component 1, and a tab portion 32 connected to the active substance coating part 31. By way of example, the accommodating cavity 12 is formed in the case component 1, and the active substance coating part 31 is stored in the accommodating cavity 12; the terminal post body 21 passes through the first case wall 11; the tab portion 32 is welded to the terminal post body 21; and the tab portion 32 is directly electrically connected to the electrode column body 21, so that the tab portion 32 is electrically connected between the active substance coating part 31 and the electrode column body 21.

By way of example, as shown in FIG. 6 and FIG. 7, a plurality of tab sheets 320 in the tab portion 32 are stacked, and are subjected to ultrasonic welding to form the converging portion 321, that is, the portion of the plurality of tab sheets 320 connected by ultrasonic welding is an ultrasonic weld mark, and the ultrasonic weld mark forms the converging portion 321, such that the plurality of tab sheets 320 in the converging portion 321 are not only stacked, but also connected. A surface of one side in a thickness direction of the converging portion 321 faces the conductive portion 20 and is arranged on the conductive portion 20, thus achieve stacking of the converging portion 321 and the conductive portion 20; and the converging portion 321 and the conductive portion 20 are connected by laser welding, and the laser weld joint forms the connecting portion 4 for connecting the conductive portion 20 to the converging portion 321.

In the embodiment of the present application, as shown in FIG. 7 to FIG. 9, the converging portion 321 includes the compacted region 3211; a thickness T1 of the compacted region 3211 is less than a theoretical thickness T2 of the tab portion 32; therefore, the thickness T1 of the compacted region 3211 of the converging portion 321 is less than the theoretical thickness T2 of the tab portion 32, it indicates that the tab sheets 320 in the compacted region 3211 are compressed, yielded, and subjected to plastic deformation, resulting in a decrease in the thickness of the tab sheets 320; and moreover, a plurality of layers of tab sheets 320 in the compacted region 3211 are tightly bonded together with no or almost no interlayer gaps, and the compaction rate of the contracting portion 321 is greater than 0%.

The "compaction rate" of the converging portion 321 refers to: a ratio of a difference between the theoretical thickness T2 of the tab portion 32 and the thickness T1 of the compacted region 3211 to a theoretical thickness T2 of the tab portion 32, i.e., (T2-T1)/T2. The theoretical thickness T2 refers to a stacking thickness of the plurality of tab sheets 320 in the tab portion 32, that is, the thickness that the tab sheets 320 are uncompressed and a plurality of layers are stacked together without gaps, for example, if the thickness of one tab sheet 320 is a (i.e., a is the thickness of a single layer of foil), and b layers of tab sheets 320 are stacked in the tab portion 32 (i.e., b is the number of foil layers), the stacking thickness of the plurality of layers of tab sheets 320 in the tab portion 32 is a x b, so the theoretical thickness T2 of the tab portion 32 is a x b.

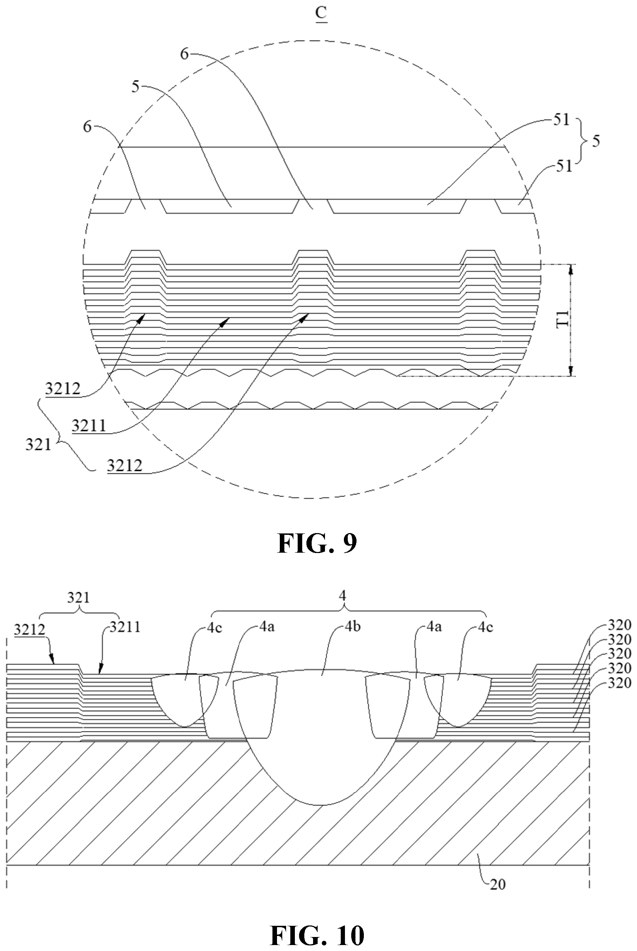

For example, as shown in FIG. 8 and FIG. 9, the converging portion 321 is processed by ultrasonic welding, the welding horn 400 used in the ultrasonic welding is provided with the welding teeth 5 and the tooth grooves 6, and the welding teeth 5 are divided by the tooth grooves 6 into the plurality of tooth portions 51 spaced apart, that is, the tooth grooves 6 are the gaps between the plurality of tooth portions 51 of the welding teeth 5; after welding, a region corresponding to the tooth portions 51 on the converging portion 321 is the compacted region 3211, and a region corresponding to the tooth grooves 6 on the converging portion 321 is the fluffy region 3212; the plurality of layers of tab sheets 320 in the compacted region 3211 are effectively welded together, there are no or nearly no interlayer gaps between foils; and the plurality of layers of tab sheets 320 in the fluffy region 3212 are not effectively fused, and there is interlayer gap between the plurality of layers of tab sheets 320.

In the embodiment of the present application, as shown in FIG. 6 and FIG. 7, the connecting portion 4 formed by the laser weld joint includes a first portion 41 formed on the converging portion 321, and a second portion 42 formed on the conductive portion 20; it is to be understood that since the connecting portion 4 needs to connect the conductive portion 20 with the converging portion 321, part of the connecting portion 4 will be formed on the converging portion 321, which is the first portion 41, and the remaining part is formed on the conductive portion 20, which is the second portion 42.

By way of example, as shown in FIG. 7, if laser welding is performed from the side of the converging portion 321 deviating from the conductive portion 20, the first portion 41 of the connecting portion 4 formed on the converging portion 321 can include: a surface portion 411 formed on an outer surface of the converging portion 321, and an inner portion 412 formed in the converging portion 321, and in this case, a contour lines 4x of the surface portion 411 and a contour lines 4y of the inner portion 412 form a contour line of the first portion 41. Or, if laser welding is performed from the side of the conductive portion 20 deviating from the converging portion 321, the first portion 41 of the connecting portion 4 formed on the converging portion 321 can only include: the internal portion 412 formed in the converging portion 321, and in this case, the contour line 4y of the inner portion 412 forms the contour line of the first portion 41.

By way of example, if the connecting portion 4 is an elongated laser weld joint, the contour line 4x of the surface portion 411 can be a rectangular frame enclosed by two long edges 4x1 and two short edges 4x2.

The contour line of the first portion 41 can be completely within the compacted region 3211, that is, the contour line of the portion of the connecting portion 4 formed on the converging portion 321 can be completely arranged in the compacted region 3211, or, a part of the contour line of the first portion 41 can be within the compacted region 3211, and the rest part is within the fluffy region 3212, that is, a part of the contour line of the connecting portion 4 formed on the converging portion 321 is within the compacted region 3211, and the rest part is within the fluffy region 3212. Because the plurality of layers of tab sheets 320 in the compacted region 3211 are tightly bonded together with no or almost no interlayer gaps, the contour line within the compacted region 3211 is greatly prevented from thermal cracks, and the conductive yield and connection reliability between the conductive portion 20 and converging portion 32 are both good.

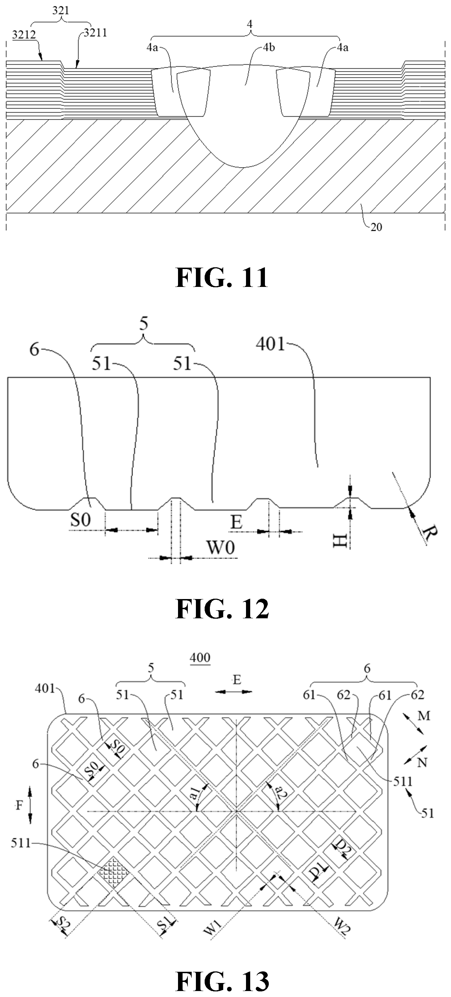

In the embodiment of the present application, if the connecting portion 4 is the laser weld joint, it can only include one weld joint which is welded once, or it can include a plurality of stacked weld joint which are welded in multiple rounds, and in this case, a total weld joint formed by the plurality of weld joints by fusion form the connecting portion 4. For example, as shown in FIG. 10, the laser weld joint can include a primer weld joint (such as the first connecting portion 4a marked in FIG. 10), a main weld joint (such as the second connecting portion 4b marked in FIG. 10), and a repair weld joint (such as the third connecting portion 4c marked in the figure) which are sequentially welded, and in this case, the total weld joint formed by the three weld joints by fusion forms the connecting portion 4. For another example, as shown in FIG. 11, the repair weld joint can be saved, and the prime weld joint (such as the first connecting portion 4a marked in FIG. 11) and the main weld joint (such as the second connecting portion 4b marked in FIG. 11) can be welded sequentially, and in this case, the total weld joint formed by the two weld joints by fusion forms the connecting portion 4. For yet another example, as shown in FIG. 7, the repair weld joint and the base weld joint can be saved, only the main weld joint (such as the second connecting portion 4b marked in FIG. 7) is welded and forms the connecting portion 4.

As shown in FIG. 12 and FIG. 13, the embodiment of the present application provides the welding horn 400; the welding end 401 of the welding horn 400 is provided with the welding teeth 5 and the tooth grooves 6; the welding teeth 5 are divided by the tooth grooves 6 into the plurality of tooth portions 51 spaced apart, and the tooth area ratio of the welding end 401 is greater than or equal to 40%. It is to be noted that "tooth area ratio of the welding end 401" refers to: a ratio of an area of the welding teeth 5 to the area of the welding end 401, or a ratio of the total area of all tooth portions 51 to the area of the welding end 401, or a ratio of a difference between a toothless area of the welding end 401 and the area of the tooth grooves on the welding end to the toothless area of the welding end 401.

Therefore, the tooth area ratio of the welding end 401 is set to be no less than 40%, thus the area ratio of the compacted region 3211 in ultrasonic welding can be increased, and more contour line of the laser weld joint can be within the compacted region 3211, thereby greatly relieving the problem of thermal cracks in the contour of the laser weld joint, and then improving conductive yield and connection strength between the tab portion 32 and the conductive portion 20, as well as enhancing the reliability of the battery cell 102.

In some embodiments of the present application, as shown in FIG. 12 and FIG. 13, the tooth grooves 6 include first linear grooves 61 and second linear grooves 62 which are arranged in a crossing way; a plurality of first linear grooves 61 are provided and are arranged in parallel, and the tooth portions 51 are defined between adjacent first second linear grooves 61 and second linear grooves 62. By way of example, since adjacent first linear grooves 61 are arranged in parallel, the tooth portion 51 limited between two adjacent first linear groove 61 and second linear groove 62 can be polygonal, and the two adjacent first linear grooves 61 and the second linear grooves 62 intersecting the two first linear grooves 61 can form the three edges of the tooth portion 51. Thus, by dividing the welding teeth 5 through the linear grooves, the tooth grooves 6 are easily machined, which helps reduce the machining cost of the welding horn 400 and improving the machining efficiency of the welding horn 400.

As shown in FIG. 13, a width W1 of the first linear grooves 61 and a width W2 of the second linear grooves 62 are both less than a spacing D1 between adjacent first linear grooves 61. The dimension of the tooth portion 51 limited between adjacent first linear groove 61 and second linear groove 62 in the direction of the spacing between the first linear grooves 61 is equal to the spacing D1 between adjacent first linear grooves 61, and this dimension is greater than both the width W1 of the first linear grooves 61 and the width W2 of the second linear grooves 62.

The area ratio of the tooth grooves 6 can be decreased, the area of the tooth portion 51 defined between adjacent first second linear groove 61 and second linear groove 62 can be increased, thereby increasing the tooth area ratio of the welding end 401; and therefore, more contour line of the laser weld joint can be within the compacted region 3211, thus greatly relieving the problem of thermal cracks in the contour of the laser weld joint, and then improving the conductive yield and connection strength between the tab portion 32 and the conductive portion 20, as well as enhancing the reliability of the battery cell 102.

In some embodiments of the present application, as shown in FIG. 13, the spacing D1 between adjacent first linear grooves 61 is 1.5-2.5 mm. For example, the spacing D1 between adjacent first linear grooves 61 can be: 1.5 mm, 1.8 mm, 2.0 mm, 2.2 mm, 2.5 mm, etc. The spacing D1 between adjacent first linear grooves 61 is not too large, which helps improve grip during welding; the spacing D1 between adjacent first linear grooves 61 is not too small, so the dimension of the tooth portion 51 defined between the adjacent first linear groove 61 and second linear groove 62 is not too small, which helps increase the tooth area ratio of the welding end 401.

In some embodiments of the present application, as shown in FIG. 13, a plurality of the second linear grooves 62 are provided and are arranged in parallel, and the tooth portions 51 are defined between adjacent first linear grooves 61 and adjacent second linear grooves 62. By way of example, since adjacent first linear grooves 61 are arranged in parallel and the adjacent second linear grooves 62 are also arranged in parallel, the tooth portions 51 defined between two adjacent first linear grooves 61 and two adjacent second linear grooves 62 can be quadrilateral, the two adjacent first linear grooves 61 and two adjacent second linear grooves 62 intersecting the two first linear grooves 61 can form the four edges of the tooth portion 51. The plurality of parallel first linear grooves 61 and the plurality of parallel second linear grooves 62 are provided, and since the first linear groove 61 and second linear grooves 62 are arranged in a crossing way, the plurality of tooth portions 51 can be easily formed, and the welding horn 400 can be easily machined.

As shown in FIG. 13, the width W1 of the first linear grooves 61 and the width W2 of the second linear grooves 62 are both less than the spacing D2 between adjacent second linear grooves 62. Thus, the dimension of the tooth portions 51 defined between adjacent first linear grooves 61 and adjacent second linear grooves 62 in the direction of spacing between the second linear grooves 62 is equal to the spacing D2 between adjacent second linear grooves 62, and this dimension is greater than both the width W1 of the first linear grooves 61 and the width W2 of the second linear grooves 62.

The area ratio of the tooth grooves 6 can be decreased, the area of the tooth portions 51 defined between adjacent first second linear grooves 61 and adjacent second linear grooves 62 can be increased, thereby increasing the tooth area ratio of the welding end 401; and therefore, more contour line of the laser weld joint can be within the compacted region 3211, thus greatly relieving the problem of thermal cracks in the contour of the laser weld joint, and then improving the conductive yield and connection strength between the tab portion 32 and the conductive portion 20, as well as enhancing the reliability of the battery cell 102.

In some embodiments of the present application, as shown in FIG. 13, the spacing D2 between adjacent second linear grooves 62 is 1.5-2.5 mm. For example, the spacing D2 between adjacent second linear grooves 62 can be: 1.5 mm, 1.8 mm, 2.0 mm, 2.2 mm, 2.5 mm, etc. The spacing D2 between adjacent second linear grooves 62 is not too large, which helps improve grip during welding; the spacing D2 between adjacent second linear grooves 62 is not too small, so the dimension of the tooth portions 51 defined between adjacent first linear grooves 61 and adjacent second linear grooves 62 is not too small, which helps increase the tooth area ratio of the welding end 401.

In some embodiments of the present application, as shown in FIG. 13, the welding end 401 is elongated, the length direction of the first linear grooves 61 intersects the length direction of the welding end 401 at an acute angle a1, and the length direction of the second linear grooves 62 and the length direction of the first linear grooves 61 are in axial symmetry with the width direction of the welding end 401, and therefore, an included angle a2 formed by intersecting the length direction of the second linear groove 62 and the length direction of the welding end 401 is equal to a1, the tooth area ratio is 40%-50%, for example, the tooth area ratio is 40%, 42%, 44%, 46%, 48%, 50%, etc.

For example, as shown in FIG. 13, the length direction of the welding end 401 extends along a fourth direction E, the width direction of the welding end 401 extends along a fifth direction F, the length direction of the first linear groove 61 extends along a sixth direction M, the length direction of the second linear groove 62 extends along a seventh direction N, the sixth direction M intersects the fourth direction E at an acute angle, and the seventh direction N and the sixth direction M are in axial symmetry with the fifth direction F. Thus, the plurality of tooth portions 51 defined by the plurality of first linear grooves 61 and the plurality of second linear grooves 62 can form a diagonal grid pattern.

The welding horn 400 is simple in structure and easy to process, and the area occupied by the first linear grooves 61 and second linear grooves 62 is relatively small, so that the tooth area ratio of the welding end 401 can be increased up to 40%-50%; and therefore, more contour line of the laser weld joint can be within the compacted region 3211, thus greatly relieving the problem of thermal cracks in the contour of the laser weld joint, and then improving the conductive yield and connection strength between the tab portion 32 and the conductive portion 20, as well as enhancing the reliability of the battery cell 102.

Furthermore, if the laser weld joint is configured to be elongated and extends along the length direction of an ultrasonic weld mark (the length direction of the welding end 401), the length direction of the second linear grooves 62 and the length direction of the first linear grooves 61 are set to be in axial symmetry with the width direction of the welding end 401; and compared with a comparative solution that the tooth area ratio reaches 40%-50%, but the length direction of the second linear grooves 62 and the length direction of the first linear grooves 61 are not set to be in axial symmetry with the width direction of the welding end 401, this solution helps reduce two long edges of the contour of the laser weld joint passing through the fluffy region 3212, thereby relieving the problem of thermal cracks in the contour of the laser weld joint.

By way of example, as shown in FIG. 13, the length direction of the first linear grooves 61 (the sixth direction M) intersects the length direction of the welding end 401 (the fourth direction E) by 45°, and the tooth portions 51 defined between adjacent first linear grooves 61 and adjacent second linear grooves 62 are first tooth portions 511; an apex dimension S1 of the first tooth portions 511 in the direction of the spacing between the first linear grooves 61 is 1.6-2 mm, and an apex dimension S2 of the first tooth portions 511 in the direction of the spacing between the second linear grooves 62 is 1.6-2 mm. Therefore, the area of the first tooth portions 511 is relatively large, which helps achieve the tooth area ratio of 40%-50%, and also helps meet grip requirements to provide greater friction. Moreover, the welding horn 400 is simple in structure, easy to process, and low in manufacturing cost.

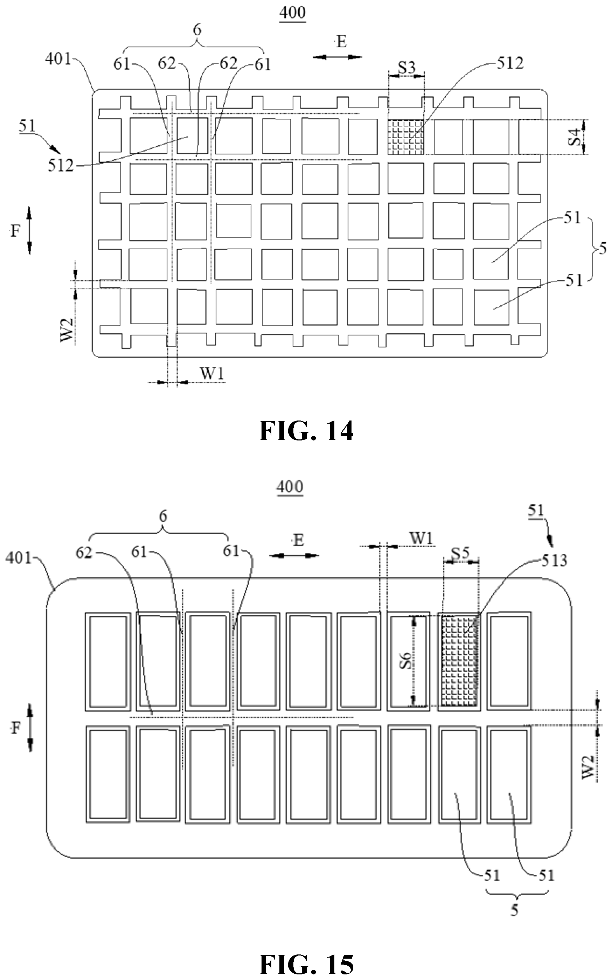

In other embodiments of the present application, as shown in FIG. 14, the welding end 401 is elongated, the length direction of the first linear grooves 61 is parallel to the width direction of the welding end 401, the length direction of the second linear grooves 62 is parallel to the length direction of the welding end 401, and the tooth area ratio is 50%-60%, for example, the tooth area ratio is 50%, 52%, 54%, 56%, 58%, or 60%, etc.

For example, as shown in FIG. 14, the length direction of the welding end 401 extends along the fourth direction E, the width direction of the welding end 401 extends along the fifth direction F, the length direction of the first linear groove 61 is parallel to the fifth direction F, and the length direction of the second linear groove 62 is parallel to the fourth direction E. Thus, the plurality of tooth portions 51 defined by the plurality of first linear grooves 61 and the plurality second linear grooves 62 can form a matts-shaped pattern.

The welding horn 400 is simple in structure and easy to process, the length direction of the first linear grooves 61 is set to be parallel to the width direction of the welding end 401, the length direction of the second linear grooves 62 is set parallel to the length direction of the welding end 401, so that the tooth area ratio of the welding end 401 can be increased up to 50%-60%; and therefore, more contour line of the laser weld joint can be within the compacted region 3211, thus greatly relieving the problem of thermal cracks in the contour of the laser weld joint, and then improving the conductive yield and connection strength between the tab portion 32 and the conductive portion 20, as well as enhancing the reliability of the battery cell 102.

Additionally, if the laser weld joint is configured to be elongated and extends g along the length direction of ultrasonic weld mark (i.e., the length direction of the welding end 401), the length direction of the first linear grooves 61 is set be parallel to the width direction of the welding end 401, and the length direction of the second linear grooves 62 is set to be parallel to the length direction of the welding end 401; and compared to a comparative solution that the tooth area ratio reaches 50%-60%, but the length direction of the first linear grooves 61 is not set to be parallel to the width direction of the welding end 401, and the length direction of the second linear grooves 62 is set to be parallel to the length direction of the welding end 401, this solution reduces the two long edges of the contour of the laser weld joint passing through the fluffy region 3212, thus relieving the problem of thermal cracks in the contour of the laser weld joint, as well as relieving the problem of debris generation at the edge of the laser weld joint.

By way of example, with reference to FIG. 14, the tooth portions 51 include second tooth portions 512 defined between adjacent first linear grooves 61 and adjacent second linear grooves 62; an apex dimension S3 of the second tooth portions 512 in the direction of the spacing between the first linear grooves 61 is 1.5-2.4 mm, and an apex dimension S4 of the second tooth portions 512 in the direction of the spacing between the second linear grooves 62 is 1.5-2.4 mm. Therefore, the area of the second tooth portions 512 is relatively large, which helps achieve the tooth area ratio of 50%-60%, and also helps meet grip requirements to provide greater friction. Moreover, the welding horn 400 is simple in structure, easy to process, and low in manufacturing cost.

In some embodiments of the present application, as shown in FIG. 15, the welding end 401 is elongated, the length direction of the first linear grooves 61 is parallel to the width direction of the welding end 401, the length direction of the second linear grooves 62 is parallel to the length direction of the welding end 401, and the second linear grooves 62 are located at the center of the width of the welding end 401; and the tooth area ratio of the welding end 401 is 60%-70%. For example, the tooth area ratio is 60%, 62%, 64%, 66%, 68%, 70%, etc.

For example, as shown in FIG. 15, the length direction of the welding end 401 extends along the fourth direction E, the width direction of the welding end 401 extends along the fifth direction F, the length direction of the first linear grooves 61 is parallel to the fifth direction F, the length direction of the second linear grooves 62 is parallel to the fourth direction E, and the second linear grooves 62 are located at the center of the welding end 401 in the fifth direction F. Thus, the plurality of tooth portions 51 defined by the first linear grooves 61 and the second linear grooves 62 can form a double-row grid pattern.

The welding horn 400 is simple in structure and easy to process; the length direction of the first linear grooves 61 is parallel to the width direction of the welding end 401, and the length direction of the second linear grooves 62 is parallel to the length direction of the welding end 401, and the second linear grooves 62 are located at the center of the width of the welding end 401, such that the ratio of the tooth grooves 6 can be decreased, the tooth area ratio of the welding end 401 can be greatly increased up to 60%-70%; and therefore, more contour line of the laser weld joint can be within the compacted region 3211, thereby greatly relieving the problem of thermal cracks in the contour of the laser weld joint, further enhancing the conductive yield and connection strength between the tab portion 32 and the conductive portion 20, as well as enhancing the reliability of the battery cell 102. Moreover, since the number of second linear grooves 62 is small, and the area of the tooth portion 51 defined between adjacent first linear groove 61 and second linear groove 62 is larger, the volume of the molten pool of the laser weld joint within the compacted region 3211 can be increased, thereby reducing the air pores in the molten pool and improving the current-carrying capacity of the laser weld laser.

By way of example, with reference to FIG. 15, the tooth portions 51 include third tooth portions 513 defined between adjacent first linear groove 61 and second linear groove 62, an apex dimension S5 of the third tooth portions 513 in the direction of the spacing between the first linear grooves 61 is 2-2.4 mm, and an apex dimension S6 of the third tooth portions 513 in the length direction of the first linear grooves 61 is 3.5-4.5 mm.

The third tooth portions 513 are elongated tooth portions 51 extending along the width direction of the welding end 401 in the length direction, and the area of the third tooth portions 513 is relatively large, which helps achieve the tooth area ratio of 60%-70% and also helps meet grip requirements to provide greater friction. Moreover, the welding horn 400 is simple in structure, easy to process, and low in manufacturing cost. If the laser weld is configured to be elongated and extends along the length direction of the ultrasonic weld mark (i.e., the length direction of the welding end 401), two rows of the elongated third tooth portions 513 are arranged on the welding end 401, such that the volume of the laser weld joint within the fluffy region 3212 in the width direction of ultrasonic weld mark can be decreased, thereby decreasing the air pores in the molten pool and improving the current-carrying capacity of the laser weld joint.

By way of example, as shown in FIG. 15, the width W1 of the first linear grooves 61 is less than the width W2 of the second linear grooves 62. Thus, if the laser weld joint is configured to be elongated and extend along the length direction of the ultrasonic weld mark (i.e., the length direction of the welding end 401), the widths of the first linear grooves 61 are set to be less than those of the second linear grooves 62, the corresponding fluffy region 3212 of the first linear grooves 61 can be narrower, such that the fluffy regions 3212 through which two long edges of the contour of the laser weld mark pass can be reduced, thus relieving the problem of cracks in the contour of the laser weld joint. By way of example, as shown in FIG. 15, the width W1 of the first linear grooves 61 is 0.2-0.4 mm, and the width W2 of the second linear grooves 62 is 0.4-0.6 mm.

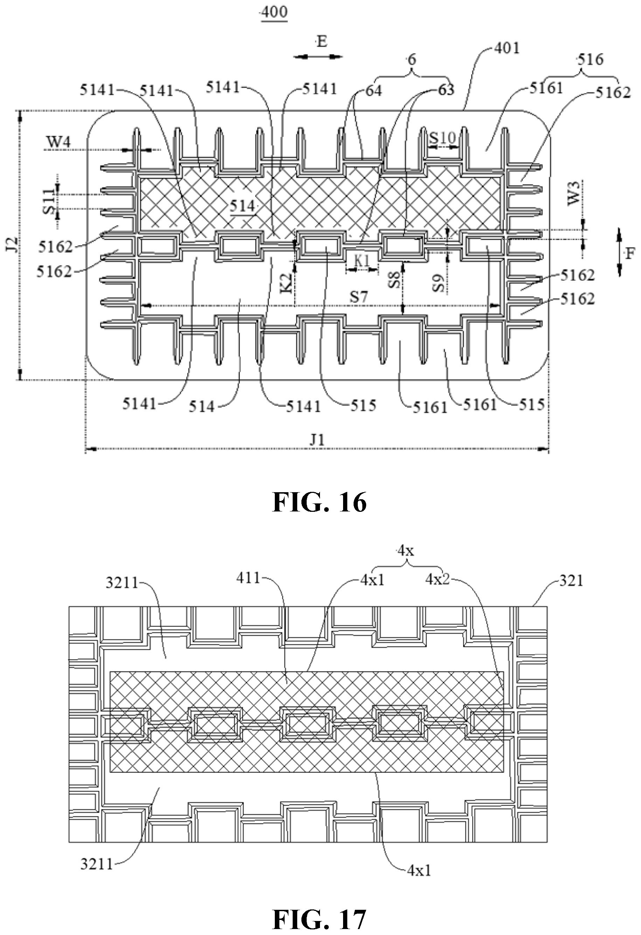

In other embodiments of the present application, as shown in FIG. 16, the welding end 401 is elongated, and the welding teeth 5 include fourth tooth portions 514 (the fourth tooth portions 514 are shown in the shaded region in FIG. 16); the length direction of the fourth tooth portions 514 is matched with the length direction of the welding end 401, the width direction of the fourth tooth portions 514 is matched the width direction of the welding end 401, and a plurality of fourth tooth portions 514 are provided and are arranged at intervals along the width direction of the welding end 401.

For example, as shown in FIG. 16, the length direction of the welding end 401 extends along the fourth direction E, the width direction of the welding end 401 extends along the fifth direction F, the length direction of the fourth tooth portions 514 is parallel to the fourth direction E, and the width direction of the fourth tooth portions 514 is parallel to the fifth direction F. Therefore, the fourth tooth portions 514 are configured to be elongated and matched with the welding end 401 in the length direction, and the plurality of elongated fourth tooth portions 514 are arranged along the width direction of the welding end 401, such that the area of each fourth tooth portion 514 is increased, thereby increasing the tooth area ratio of the welding end 401; and therefore, more contour line of the laser weld joint can be within the compacted region 3211, thereby greatly relieving the problem of thermal cracks in the contour of the laser weld joint, further enhancing the conductive yield and connection strength between the tab portion 32 and the conductive portion 20, as well as enhancing the reliability of the battery cell 102.

Additionally, as shown in FIG. 17, if the laser weld joint (the laser weld joint is shown in the shaded region in FIG. 17) is configured to be elongated and extends along the length direction of the ultrasonic weld mark (i.e., the length direction of the welding end 401), the fourth tooth portions 514 are configured to be elongated and matched with the welding end 401 in the length direction, the plurality of elongated fourth tooth portions 514 are arranged along the width direction of the welding end 401, the two long edges of the contour of the laser weld joint can correspond to the elongated compacted region 3211 corresponding to the fourth tooth portions 514, such that the two long edges of the contour of the laser weld joint can be more within the compacted region 3211 corresponding to the fourth tooth portions 514, thereby relieving the problem of thermal cracks in the contour of the laser weld joint.

In some embodiments of the present application, as shown in FIG. 16 and FIG. 17, two fourth tooth portions 514 are provided and are arranged at intervals along the width direction of the welding end 401; the ratio of a apex length S7 of the fourth tooth portions 514 in the length direction of the welding end 401 to a length J1 of the welding end 401 is 75%-85%, and the ratio of an apex width S8 of the fourth tooth portions 514 in the width direction of the welding end 401 to half the width J2 of the welding end 401 is 75%-85%, and the tooth area ratio of the welding end 401 is 70%-80%. For example, the tooth area ratio is 70%, 72%, 74%, 76%, 78%, 80%, etc.

The area of each fourth tooth portion 514 can be further increased, thus the tooth area ratio of the welding end 401 can be increased up to 70%-80%; and therefore, more molten pool of the laser weld joint can be within the compacted region 3211, thereby decreasing the air pores in the molten pool and improving the current-carrying capacity of the laser weld joint. Furthermore, if the laser weld is configured to be elongated and extends along the length direction of ultrasonic welding, the two long edges of the contour of the laser weld joint can be within the compacted regions 3211 corresponding to the two fourth tooth portions 514 respectively, thus facilitating the arrangement of the laser weld joint as well as relieving the problem of thermal cracks in the contour of the laser weld joint.

In some embodiments of the present application, as shown in FIG. 16 and FIG. 17, each long edge of the fourth tooth portions 514 is provided with a plurality of protrusions 5141 arranged at intervals along the length direction of the welding end 401, and the protrusions 5141 protrude toward the width direction of the welding end 401.

In the above technical solution, each long edge of the fourth tooth portions 514 is uneven, which helps improve grip during welding to provide greater friction so that the fourth tooth portions 514 can compact the tab sheets 320 effectively, thereby increasing the compacting rate of the compacted regions 3211 corresponding to the fourth tooth portions 514, and further relieving the problem of cracks in the contour of the laser weld joint.

In some embodiments of the present application, as shown in FIG. 16 and FIG. 17, the welding teeth 5 also include a plurality of fifth tooth portions 515 arranged between two fourth tooth portions 514 and spaced along the length direction of the welding end 401; the protrusions 5141 on adjacent sides of the two fourth tooth portions 514 are opposite to each other, and two opposite protrusions 5141 are arranged between every two adjacent fifth tooth portions 515; and the contours of the fourth tooth portions 514 are matched with the contours of the fifth tooth portions 515.

In the above technical solution, the welding end 401 can be further utilized to construct the welding teeth 5, thus increasing the tooth area ratio of the welding end 401; if the two long edges of the laser weld joint are correspondingly located in the compacted regions 3211 corresponding to the two fourth tooth portions 514, the laser weld joint can also cover at least part of the compacted regions 3211 corresponding to the plurality of fifth tooth portions 515, thereby increasing the part of the laser weld joint in the compacted region 3211, further relieving the problem of the generation of the air pores in the molten pool of the laser weld joint, and further improving the conductive yield of the converging portion 321 and the conductive portion 20. The contours of the fifth tooth portions 515 are matched with the contours of the two fourth tooth portions 514, namely, protruding positions of the contours of the fourth tooth portions 514 correspond to recessed positions of the contours of the fifth tooth portions 515, such that the space of the welding end 401 can be further fully utilized to form the welding teeth 5, and the areas of the fourth tooth portions 514 and the fifth tooth portions 515 can be increased, thereby further increasing the tooth area ratio, further relieving the problem of the generation of the air pores in the molten pool of the laser weld joint, and improving the conductive yield between the converging portion 321 and the conductive portion 20.

As shown in FIG. 16, the tooth grooves 6 include first separation grooves 63 spaced between the two fourth tooth portions 514 and spaced between the fourth tooth portions 514 and the fifth tooth portions 515. By way of example, an apex width S9 of the fifth tooth portions 515 in the width direction of the welding end 401 is less than one-third of the apex width S8 of the fourth tooth portions 514 in the width direction of the welding end 401, and the width W3 of the first separation grooves 63 is less than two-thirds of the apex width S9 of the fifth tooth portions 515 in the width direction of the welding end 401. Therefore, the spacing between the two fourth tooth portions 514 is small, and the spacing between the fourth tooth portions 514 and the fifth tooth portions 515 is small, so that most of the region with the molten pool of the laser weld joint is the compacted region 3211, which helps relieve the problem of the generation of the air pores in the molten pool of the laser weld joint and further enhances the conductive yield between the converging portion 321 and the conductive portion 20.

In some embodiments of the present application, as shown in FIG. 16 and FIG. 17, the welding teeth 5 include a plurality of sixth tooth portions 516 which are arranged at intervals around the two fourth tooth portions 514, and the contours of the fourth tooth portions 514 are matched with the contours of the sixth tooth portions 516.

In the above technical solution, the plurality of sixth tooth portions 516 are arranged around the two fourth tooth portions 514, and the contours of the sixth tooth portions 516 are matched with the contours of the fourth tooth portions 514, namely, protruding positions of the contours of the fourth tooth portions 514 correspond to recessed positions of the contours of the sixth tooth portions 516, which helps improve grip during welding to provide greater friction; and therefore, the fourth tooth portions 514 can effectively compact the tab sheets 320, thereby improving the compaction rate of the compacted regions 3211 corresponding to the fourth tooth portions 514, and further relieving the problem of cracks in the contour of the laser weld joint.

As shown in FIG. 16, the tooth grooves 6 include second separation grooves 64 spaced between the fourth tooth portions 514 and the sixth tooth portions 516, as well as spaced between two adjacent sixth tooth portions 516. By way of example, the width W4 of the second separation grooves 64 and the width W3 of the first separation grooves 63 can be equal to or close to each other.

In some embodiments, a dimension K1 of the protrusions 5141 along the length direction of the welding end 401 is 1.5-2.4 mm, and a dimension K2 of the protrusions 5141 along the width direction of the welding end 401 is 0.2-1.2 mm. In the above technical solution, the dimension of the protrusions 5141 is arranged as above, which helps increase the grip during welding to provide greater friction; and therefore, the fourth tooth portions 514 can effectively compact the tab sheets 320.

In some embodiments, as shown in FIG. 16, the sixth tooth portions 516 include first sub-teeth 5161 located on both sides of the two fourth tooth portions 514 in the width direction of the welding end 401, and second sub-teeth 5162 located on both sides of the two fourth tooth portions 514 in the length direction of the welding end 401; a plurality of first sub-teeth 5161 are provided and are arranged in the length direction of the welding end 401, and a plurality of second sub-teeth 5162 are provided and are arranged along the width direction of the welding end 401; an apex width S10 of the first sub-teeth 5161 in the length direction of the welding end 401 is 1.8-2.2 mm, and an apex width S11 of the second sub-teeth 5162 in the width direction of the welding end 401 is 0.8-1.2 mm. In the above technical solution, it helps improve grip during welding, and therefore, the fourth tooth portions 514 can effectively compact the tab sheets 320.

In some embodiments, as shown in FIG. 12, the width W0 of the tooth grooves 6 is 0.2-0.6 mm, such as 0.2 mm, 0.3 mm, 0.4 mm, 0.5 mm, or 0.6 mm. By way of example, the tooth grooves 6 can be composed of a plurality of line-shaped grooves, for example, the first linear grooves 61, second linear grooves 62, the first separation groove 63, and the second separation grooves 64 are all line-shaped grooves, and the width of each groove can be 0.2-0.6 mm. Therefore, the width of the tooth grooves 6 is smaller, which can reduce the ratio of the tooth grooves 6 on the welding end 401, thereby increasing the ratio of the welding teeth 5, and then increasing the ratio of the compacted region 3211 on the converging portion 321.

In some embodiments, as shown in FIG. 12 and FIG. 13, an apex dimension S0 of the tooth portions 51 in a normal direction of adjacent tooth groove 6 is greater than or equal to 1.5 mm. The tooth portions 51 are divided by the tooth grooves 6, and the dimension of the apexes of the tooth portions 51 in the normal direction to which the tooth grooves 6 of the tooth portions 51 is defined is the apex dimension S0. By way of example, there are a plurality of tooth portions 51, for example, the first tooth portions 511, the second tooth portions 512, the third tooth portions 513, the fourth tooth portions 514, the fifth tooth portions 515, and the sixth tooth portions 516; the apex dimension S0 of any tooth portion 51 in the normal direction of adjacent tooth groove 6 can be greater than or equal to 1.5 mm. As a result, the area of a single tooth portion 51 is not too small, which helps improve the compaction rate of the compacted region 3211.

In some embodiments, as shown in FIG. 12, a tooth height H of the tooth portions 51 is less than or equal to 2.5 mm, and a projection spacing E between the apex and bottom of the tooth portions 51 is 0.1-0.2 mm.

It is to be understood that the tooth height H refers to a height perpendicular to an outer end surface (the surface with the top surface of each tooth portion 51) of the welding end 401, and the projection spacing E between the apex and bottom of the tooth portions refers to a distance between projections on the surfaces with the top surfaces of each tooth portion 51 on the outer end surface of the welding end 401. By way of example, there are a plurality of tooth portions 51, for example, the first tooth portions 511, the second tooth portions 512, the third tooth portions 513, the fourth tooth portions 514, the fifth tooth portions 515, and the sixth tooth portions 516; the height H of any tooth portion 51 is less than or equal to 2.5 mm, and the projection spacing E between the apex and bottom of any tooth portion 51 can be 0.1-0.2 mm.

Therefore, the height H of the tooth portions 51 is set to be less than or equal to 2.5mm, and the projection spacing E between the apex and bottom of the tooth portions 51 is 0.1-0.2 mm, so that the side surfaces of the tooth portions 51 are certainly inclined, which helps improve the compaction rate and reduce the edge sharpness of the tooth portions 51 so as to solve the problem of scratching of the tab sheets 320.

In some embodiments, as shown in FIG. 12, the edge of the welding end 401 is chamfered, and a chamfering radius R is 0.5-2 mm, such as 0.5 mm, 0.8 mm, 1 mm, 1.2 mm, 1.4 mm, 1.6 mm, or 2 mm. During ultrasonic welding, the problem that the edge of the welding end 401 scratches the edges of the tab sheets 320 can be relieved, thus facilitating smooth welding and enhancing the reliability and conductivity of the connection between the tab portion 32 and the conductive portion 20. Moreover, if the chamfering radius R is relatively large, it is beneficial for effective welding under high welding parameters without damaging the foil, which helps relieve the problem of cracks in the tab sheets 320.

In related technologies, uniform welding teeth are usually applied to ultrasonic welding horns, and the tooth area ratio of the welding end is less than 40%; after welding the tab portions by the ultrasonic welding horn, the compacted regions and the fluffy regions in the obtained ultrasonic weld mark are basically evenly distributed, the area ratio of the compacted regions is less than 40%, and the compaction rate of the compacted regions is less than 5%; if laser welding is carried out to weld the ultrasonic weld mark to a terminal post component, most of the contour of the laser weld joint will be within the fluffy region; because a plurality of layers of tab sheets in the fluffy region are not fused together, there are interlayer gaps, and these gaps will cause thermal cracks in the contour of the laser weld joint, resulting in influence on the connection reliability and conductive yield between the tab portion and the conductive portion, thus reducing the current-carrying capacity of the battery well, and affecting reliability of the battery cell.

In the embodiments of the present application, the distribution, shape, and size of the welding teeth 5 at the welding end 401 of the welding horn 400 are improved, thus the processed ultrasonic weld mark can provide a larger compacted region 3211, and the compaction rate of the compacted region 3211 can be increased; additionally, a tight compacted region 3211 can be provided along the laser welding direction between the tab portion 32 and the conductive portion 20 (for example, along the length direction of the weld end 401), thereby effectively relieving the problem of thermal cracks in the contour of the laser weld joint, improving the connection reliability and conductive yield between the tab portion 32 and the conductive portion 20, as well as enhancing the reliability of battery cell 102.

Moreover, welding parameters, tooth arrangement, and the like can be adjusted accordingly according to the welding methods, for example, during welding the welding horn 400 in the embodiment of the present application, vibration can be performed along the length direction of the welding end 401 or the width direction of the welding end 402, for example, the entire welding horn 400 can be enlarged or reduced by 20%-60% according to the vibration direction, so the application range of the welding horn 400 in the embodiment of the present application is expanded.

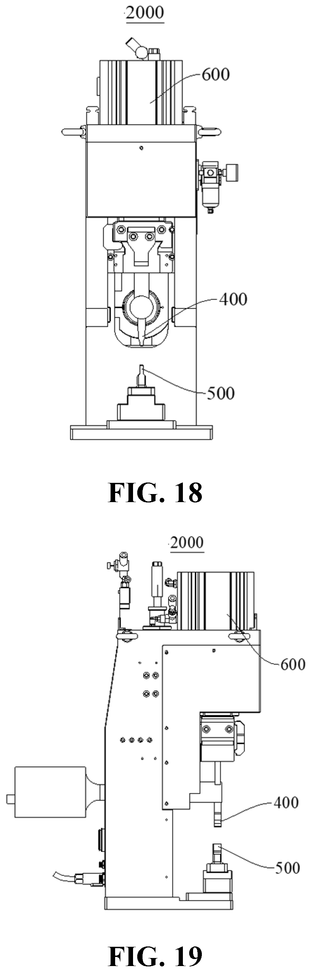

With reference to FIG. 18 and FIG. 19, the embodiment of the present application also provides an ultrasonic welding apparatus 2000, which includes: the welding horn 400, a welding pad 500, and a drive cylinder 600; the drive cylinder 600 is arranged on the side of the welding horn 400 away from the welding pad 500, and the drive cylinder 600 is configured to the welding horn 400 to move toward the welding pad 500; and the welding horn 400 is the welding horn 400 in any of the above solutions.

By way of example, the drive cylinder 600 is above the ultrasonic welding apparatus 2000, and a lower portion of the drive cylinder 600 is connected to the welding horn 400 through guide rails, transfer blocks, etc.; the drive cylinder 600, the welding horn 400, and the welding pad 500 are arranged sequentially from top to bottom in a three-point line, such that the ultrasonic welding process is more stable, and mechanical loss is reduced; and the deformation of the welding horn 400 is relatively low and negligible. During welding, the plurality of layers of tab sheets 320 to be welded can be placed between the welding horn 400 and the welding pad 500, the drive cylinder 600 is activated to push the welding horn 400 to downward move toward the welding pad 500, and the plurality of layers of tab sheets 320 are welded by the welding horn 400 and the welding pad 500 to form the ultrasonic weld mark.

Since the welding horn 400 in the embodiment of the present application helps increase the area of the compacted region 3211 in ultrasonic weld mark, there is a large compacted region 3211 in the ultrasonic weld mark welded by the ultrasonic welding apparatus 2000, which helps improve the effect of subsequent laser welding between the tab portion 32 and the conductive portion 20.

In the embodiment of the present application, the type of the drive cylinder 600 is not limited; for example, it can be an electric cylinder, a hydraulic cylinder, or a pneumatic cylinder; by increasing the pressure of the drive cylinder 600, the compaction rate of the compacted region 3211 can be improved. For example, in some embodiments, the drive cylinder 600 is the pneumatic cylinder with a diameter greater than 125 mm.

In the embodiment of the present application, a thickness T1 of the compacted region 3211 is less than a theoretical thickness T2 of the tab portion 32, such that the compaction rate of the compacted region 3211 is greater than 0%, which indicates that the tab sheets 320 in the compacted region 3211 needs to be compressed, yielded, and subjected to plastic deformation. Therefore, according to the ultrasonic welding apparatus 2000 in the embodiment of the present application, the surface pressure provided by the welding horn 400 is needed to be greater than the yield strength of the tab sheets 320, such as an aluminum foil.

By way of example, under ultrasonic conditions, the yield strength of the tab sheets 320, such as an aluminum foil is shown as Rp 0.2=σ, the length of the welding end 401 of the welding horn 400 is J1, the width of the welding end 401 is J2, the area of the welding end 401 of the welding horn 400 is shown as S=J1×J2; if the drive cylinder 600 is the pneumatic cylinder, the pressure provided by the pneumatic cylinder is P, the diameter of the pneumatic cylinder is d, and the surface pressure provided by the welding horn 400 is shown as Pπ(d/2)²/S, in which, if Pπ(d/2)²/S ≥σ, the tab sheets 320 can be compressed and yield and subjected to plastic deformation, so that the compaction rate of the compacted region 3211 can be greater than 0%.

According to the above formula, it can be seen that increasing the diameter of the pneumatic cylinder to d can improve the compaction rate of the compacted region 3211. By way of example, if the drive cylinder 600 is the pneumatic cylinder, after the welding horn 400 is selected and the area S of the welding end 401 is fixed, an air supply pressure of the pneumatic cylinder in the ultrasonic welding apparatus 2000 can be adjusted to the maximum, for example, the upper limit of the air supply pressure in a factory building is usually 0.6 MPa, and then, after welding with the pneumatic cylinders having typical diameters of 100 mm or 125 mm, the surface pressure provided by the welding horn 400 remains lower than that of the yield strength of the tab sheet 320, such as the aluminum foil.

The diameter of the pneumatic cylinder is increased to exceeds 125 mm, the surface pressure provided by the welding horn 400 can be improved, thus interlayer gaps of the tab sheets 320 are realized, the compaction rate of the compacted region 3211 can be increased, favorable conditions are provided for subsequent laser welding, and the problem of thermal cracks in the contour of the laser weld joint is relieved.

In related technologies, after ultrasonic welding of the tab portion, the ultrasonic welding mark cannot achieve effective interlayer welding, there are interlayer gaps between the plurality of layers of tab sheets, and the interlayer gaps are large, the compaction rate is low; during cooling after laser welding of the ultrasonic weld mark and the conductive portion, the problem of thermal cracks in the contour of the laser weld joint affects the performance of the battery cell.

The ultrasonic welding apparatus 2000 in the embodiment can be a direct-pressure welding machine with stronger welding capability; by increasing the diameter of the pneumatic cylinder, it can provide ultra-high pressure to the tab sheets 320 during ultrasonic pre-welding; and at this pressure, the frictional heat generated by ultrasonic pre-welding more easily softens the aluminum foil, thus realizing a tighter interlayer bonding, and achieving effective interlayer welding of the tab sheets 320; the tabs are subjected to significant plastic deformation, thus achieving a welding integrity effect between the plurality of layers of tab sheets 320, reducing the interlayer gaps, and increasing the compaction rate of the compacted region 3211; during ultrasonic welding of the ultrasonic weld mark and the conductive portion 20, the contour of the formed laser weld joint is less likely to have thermal cracks, thereby relieving the problem of thermal cracks in the contour of the laser weld joint, improving the conductive yield and connection strength between the tab portion 32 and the conductive portion 20, reducing the air pores in the molten pool of the laser weld joint, improving the current-carrying capacity of the laser weld joint, as well as enhancing the reliability of the battery cell 102.

According to the ultrasonic welding apparatus 2000 in the embodiment of the present application, an ultra-large diameter pneumatic cylinder is developed, and the welding teeth 5 of the welding horn 400 are optimized, thus the tab sheets 320 can be subjected to plastic deformation under ultra-high pressure, thereby reducing the interlayer gaps between the tab sheets 320; moreover, the optimized welding teeth 5 can provide a larger compacted region, which helps increase the area of the compacted region 3211 in ultrasonic weld mark, thereby providing a good foundation for subsequent laser welding of the tab portion 32 and the conductive portion 20, and relieving the problem of the thermal cracks in the contour of the laser weld joint. This optimization method is simple and highly reliable, and is a simple and reliable effective method to relieve the thermal cracks in laser welding after ultrasonic pre-welding, and it is not needed to carry out other process design or add mechanical components to solve this technical problem.

By way of example, the diameter of the pneumatic cylinder is 160 mm or 200 mm. As a result, the pneumatic cylinder is easier to machine and can achieve operation, and the compaction rate of the compacted region 3211 is relatively high, thus effectively relieving the problem of thermal cracks in the contour of the laser weld joint, enhancing the conductive yield and connection strength between the tab portion 32 and conductive portion 20, reducing the air pores in the molten pool of the laser weld joint, improving the current-carrying capacity of the laser weld joint, and improving the reliability of the battery cell 102.

With reference to FIG. 2 to FIG. 7, the embodiment of the present application also provides the battery cell 102, which includes: a case component 1, a terminal post component 2, and an electrode assembly 3; the terminal post component 2 is arranged on the case component 1 and includes the conductive portion 20; the electrode assembly 3 is accommodated in the case component 1 and includes the tab portion 32, the tab portion 32 includes the plurality of tab sheets 320 which are stacked, and the plurality of tab sheets 320 are connected to form the converging portion 321; the converging portion 321 is machined by the ultrasonic welding apparatus 2000 in any of the above and the compacted region 3211 is machined by the welding teeth 5; the converging portion 321 and the conductive portion 20 are stacked and connected to form the connecting portion 4; the converging portion 321 includes the compacted region 3211, the thickness of the compacted region 3211 is less than the stacked thickness of the plurality of tab sheets 320 in the tab portion 32; and the connecting portion 4 includes the first portion 41 formed on the converging portion 321, and at least most of the contour line of the first portion 41 is within the compacted region 3211.

In the above technical solution, since at least part of the contour line of the connecting portion 4 formed on the converging portion 321 is within in the compacted region 3211, the plurality of layers of tab sheets 320 in the compacted region 3211 are tightly bonded together, the problem of thermal cracks in the contour of the connecting portion 4 can be relieved, thus improving the conductive yield and connection strength between the tab portion 32 and the conductive portion 20, as well as enhancing the current-carrying capacity and reliability of the battery cell 102.

In some embodiments, at least most of the contour line of the first portion 41 is within the compacted region 3211, that is, at least most of the contour line of the connecting portion 4 formed on the converging portion 321 is arranged in the compacted region 3211, which indicates that more than 50% (including 50%) of the contour line of the connecting portion 4 formed on the converging portion 321 is within the compacted region 3211, or, the ratio of the contour line of the first portion 41 within the compacted region 3211 is greater than ratio within the fluffy region 3212. As a result, the problem of thermal cracks in the contour of the laser weld joint can be relieved on a larger scale, thus further enhancing the conductive yield and connection strength between the tab portion 32 and the conductive portion 20, and enhancing the reliability of the battery cell 102.

In some embodiments, as shown in FIG. 7 and FIG. 17, the connecting portion 4 extends from an outer surface of the converging portion 321 to the conductive portion 20; the first portion 41 includes a surface portion 411 formed on the outer surface of the converging portion 321, and more than 60% of the contour line 4x of the surface portion 411 is within the compacted region 3211.

In the above technical solution, the connecting portion 4 extends from the converging portion 321 to the conductive portion 20, thus the welding horn 400 can be conveniently aligned with the converging portion 321, a welding track can be reasonably designed for the welding horn 400 based on the distribution of the compacted region 3211 and the fluffy region 3212 on the converging portion 321, and it can be accurately welded along the welding track, such that at least most of the contour line of the connecting portion 4 formed on the converging portion 321 can be reliably within the compacted region 3211, thereby effectively improving the conductive yield and connection strength between the tab portion 32 and the conductive portion 20, as well as enhancing the current-carrying capacity and reliability of the battery cell 102.

Moreover, more than 60% of the contour line 4x of the surface portion 411 is within the compacted region 3211, so that the problem of thermal cracks in the contour of the weld joint of the connecting portion 4 on the surface of the converging portion 321 can be further relieved. Additionally, since the connecting portion 4 extends from the outer surface of the converging portion 321 to the conductive portion 20, the contour line 4y of the internal portion 412 can extend from the contour line 4x of the surface portion 411 to the conductive portion 20; and if more than 60% of the contour line 4x of the surface portion 411 is within the compacted region 3211, the ratio of the contour line 4y of the inner portion 412 in the compacted region 3211 compared to the fluffy region 3212 can be further increased, thereby further relieving the problem of thermal cracks in the contour line of the first portion 41 of the connecting portion 4 formed on the converging portion 321.

In some embodiments, the compaction rate of the compacted region 3211 is at least 12%; the compaction rate of the compacted region 3211 is set to be at least 12%, the gaps in the compacted region 3211 are almost eliminated; therefore, the portion of the connecting portion 4 in the compacted region 3211 is greatly prevented from thermal cracks and air pores, the overall current-carrying capacity of the connecting portion 4 can be improved, and the reliability of the connecting portion 4 connecting the conductive portion 20 with the converging portion 321 as well as the conductive yield can be improved.

By way of example, for a large toothed welding horn, the thickness T1 of the compacted region after welding can be tested by a micrometer or a high-precision micrometer; and for a small toothed welding horn, the thickness T1 of the compacted region after welding can be tested by an optical microscopy for cross-sectional testing on polyester resin samples.

Seven groups of experiments are compared below; in each sample for experiment, 50 layers of tab sheets are stacked in the tab portion, each with a thickness of 13 µm, and the theoretical thickness of the tab portion T2 is 650 µm.

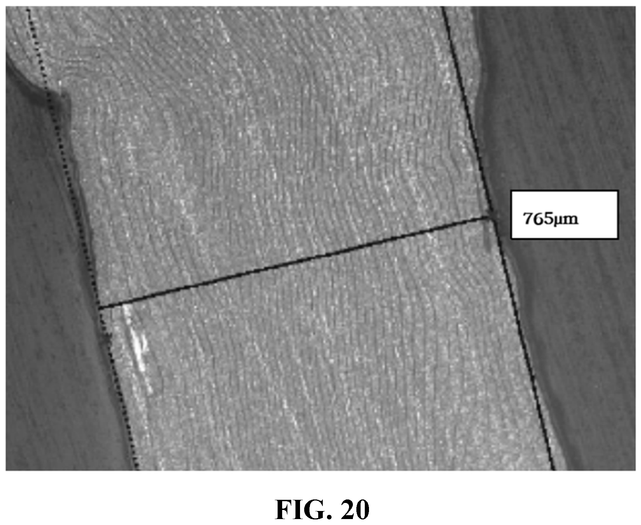

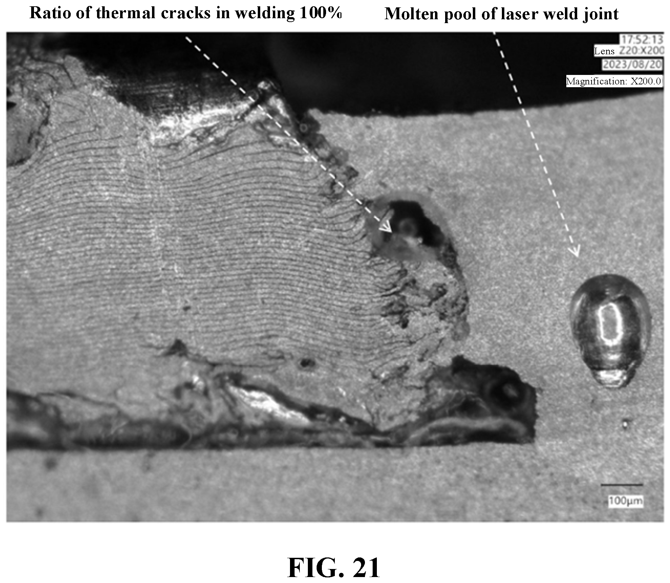

Experiment 1: the ultrasonic pre-welding effect and the laser welding effects of a Contrast Example 1 are obtained, FIG. 20 shows the local cross-sectional morphology of the converging portion in the Contrast Example 1, the thickness T1 of the compacted region is 765 µm, and the calculated compaction rate is -17.7%; FIG. 21 shows the local cross-sectional morphology after laser welding between the converging portion and the conductive portion, and as shown in the figure, the contour of the laser weld joint has thermal cracks, and the ratio of the thermal cracks approaches 100%.

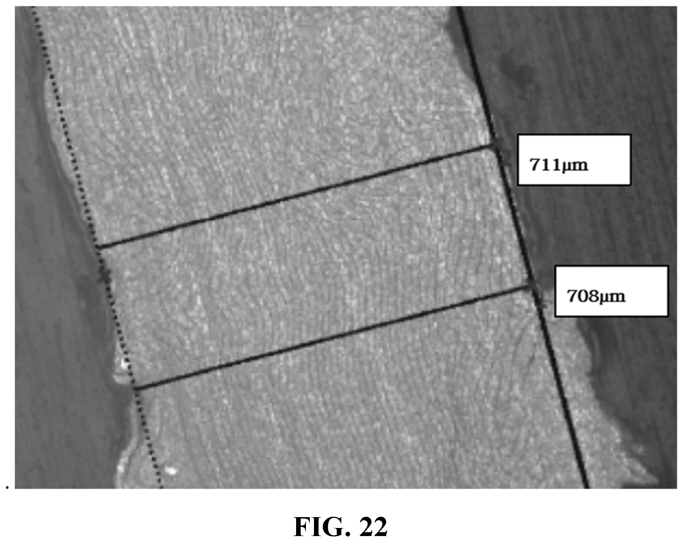

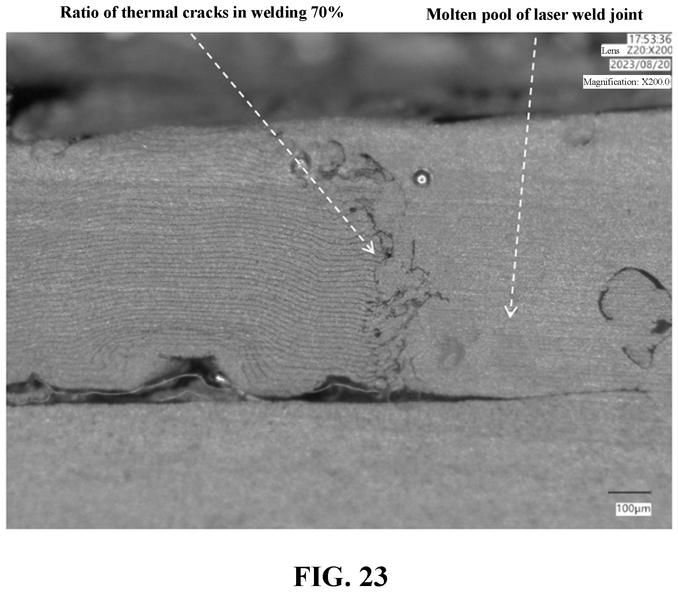

Experiment 2: the ultrasonic pre-welding effect and the laser welding effects of a Contrast Example 2 are obtained, FIG. 22 shows the local cross-sectional morphology of the converging portion in the Contrast Example 2, the thickness T1 of the compacted region is 711 µm, and the calculated compaction rate is -9.4%; FIG. 23 shows the local cross-sectional morphology after laser welding between the converging portion and the conductive portion, and as shown in the figure, the contour of the laser weld joint has thermal cracks, and the ratio of the thermal cracks approaches 70%.

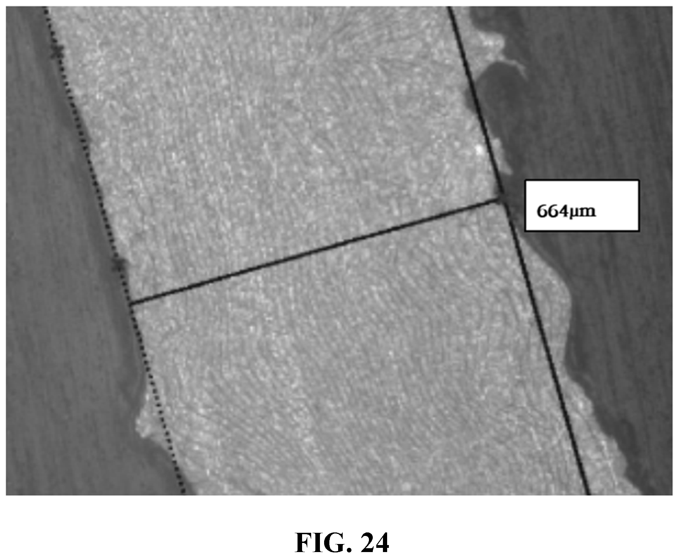

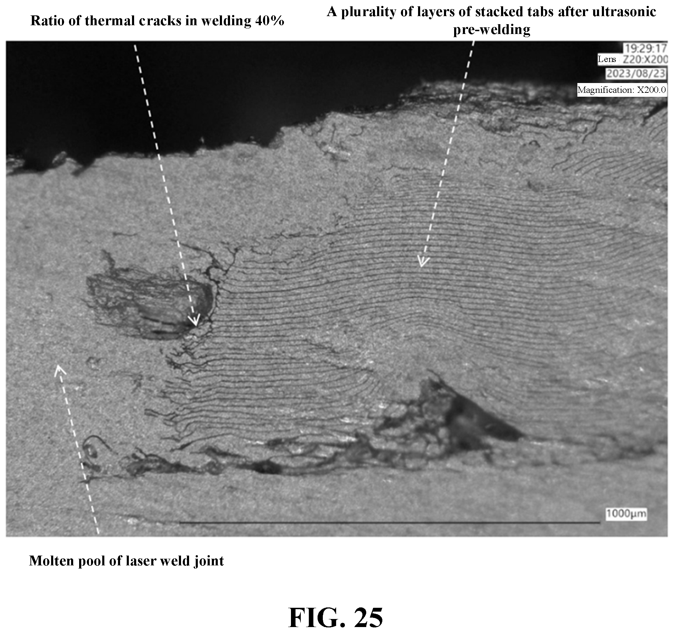

Experiment 3: the ultrasonic pre-welding effect and the laser welding effects of a Contrast Example 3 are obtained, FIG. 24 shows the local cross-sectional morphology of the converging portion in the Contrast Example 3, the thickness T1 of the compacted region is 664 µm, and the calculated compaction rate is -2.2%; FIG. 25 shows the local cross-sectional morphology after laser welding between the converging portion and the conductive portion, and as shown in the figure, the contour of the laser weld joint has thermal cracks, and the ratio of the thermal cracks approaches 40%.

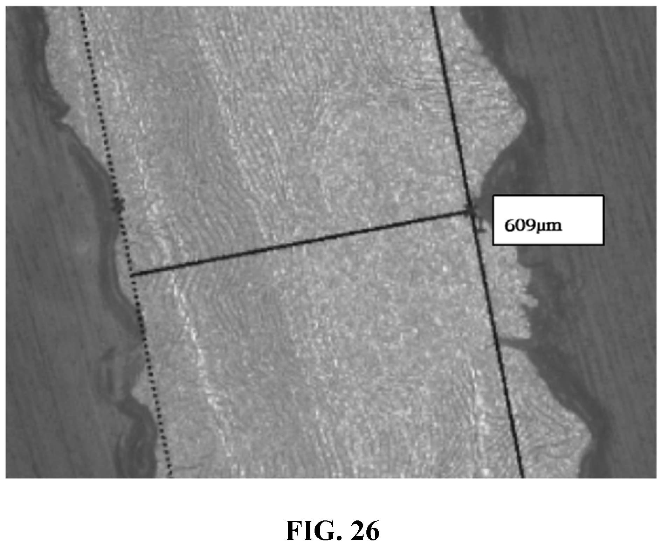

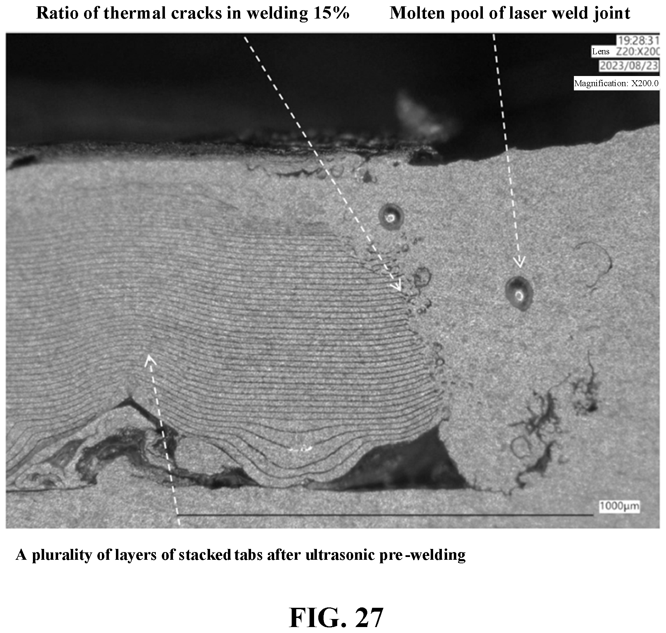

Experiment 4: the ultrasonic pre-welding effect and the laser welding effects of an Example 3 are obtained, FIG. 26 shows the local cross-sectional morphology of the converging portion in the Example 1, the thickness T1 of the compacted region is 609 µm, and the calculated compaction rate is 6.3%; FIG. 27 shows the local cross-sectional morphology after laser welding between the converging portion and the conductive portion, and as shown in the figure, the contour of the laser weld joint has few thermal cracks, and the ratio of the thermal cracks approaches 15%.

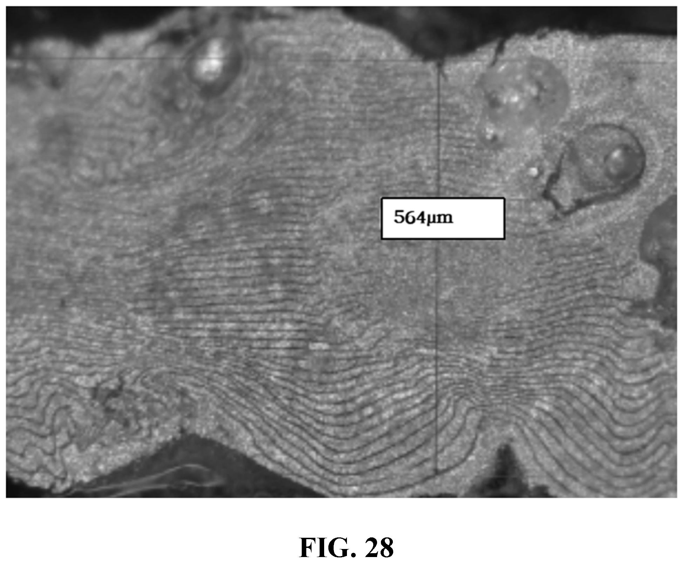

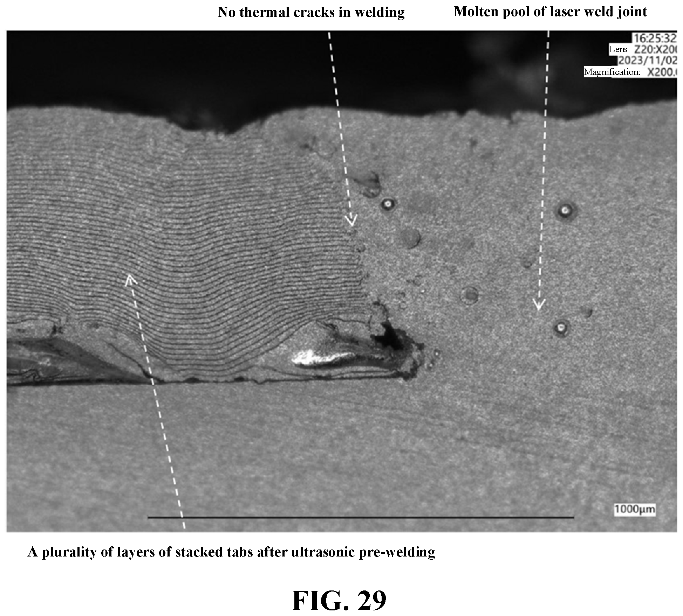

Experiment 5: the ultrasonic pre-welding effect and the laser welding effects of an Example 2 are obtained, FIG. 28 shows the local cross-sectional morphology of the converging portion in the Example 2, the thickness T1 of the compacted region is 564 µm, and the calculated compaction rate is 13.2%; FIG. 29 shows the local cross-sectional morphology after laser welding between the converging portion and the conductive portion, and as shown in the figure, the contour of the laser weld joint has almost no thermal cracks.

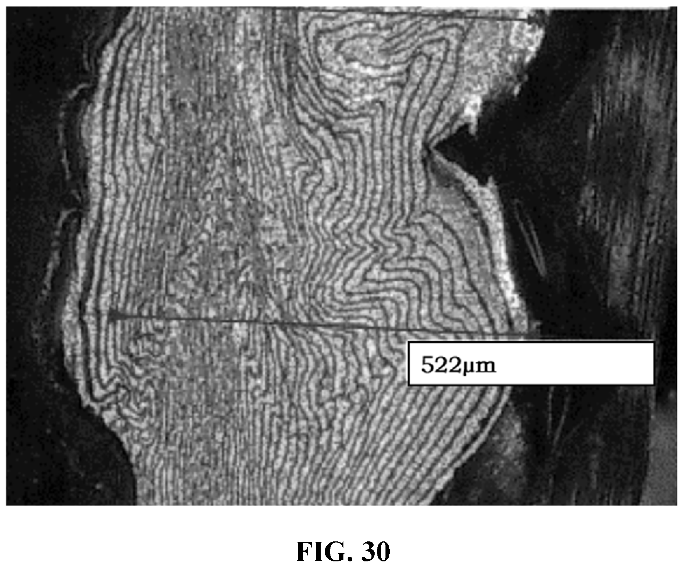

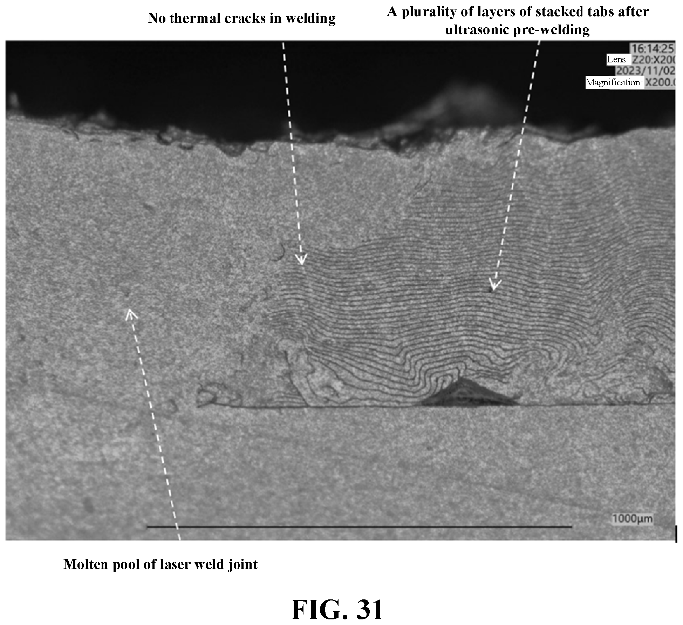

Experiment 6: the ultrasonic pre-welding effect and the laser welding effects of an Example 3 are obtained, FIG. 30 shows the local cross-sectional morphology of the converging portion in the Example 3, the thickness T1 of the compacted region is 522 µm, and the calculated compaction rate is 19.7%; FIG. 31 shows the local cross-sectional morphology after laser welding between the converging portion and the conductive portion, and as shown in the figure, the contour of the laser weld joint has no thermal cracks.

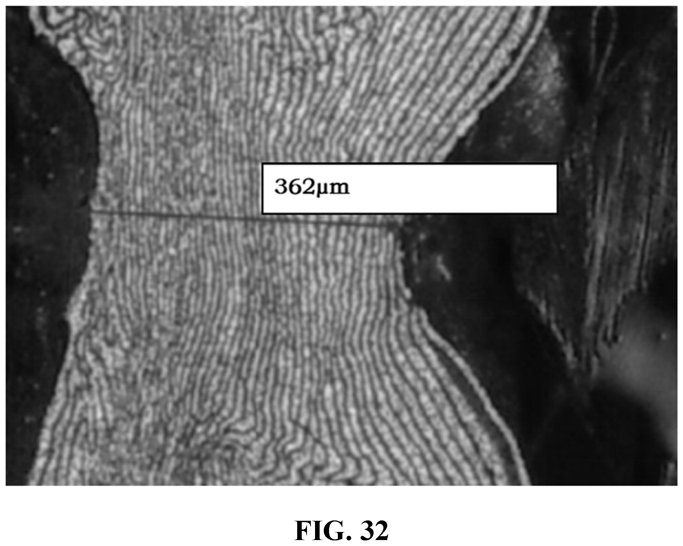

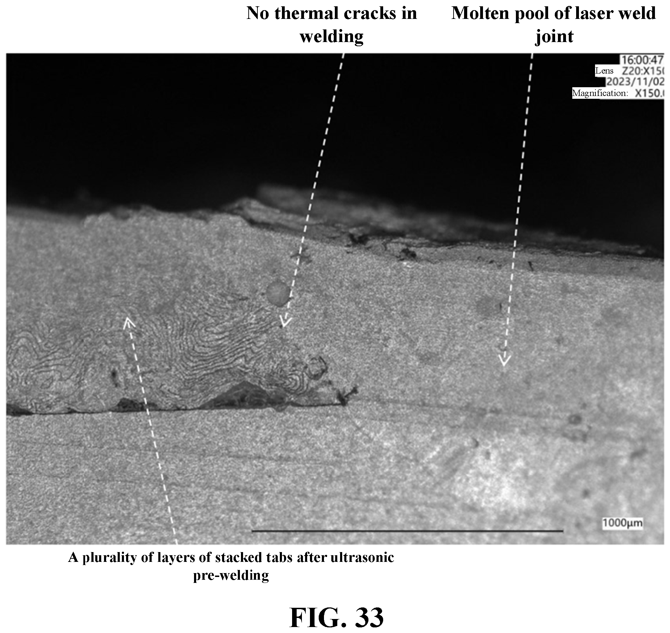

Experiment 7: the ultrasonic pre-welding effect and the laser welding effects of an Example 4 are obtained, FIG. 32 shows the local cross-sectional morphology of the converging portion in the Example 4, the thickness T1 of the compacted region is 362 µm, and the calculated compaction rate is 44.3%; FIG. 33 shows the local cross-sectional morphology after laser welding between the converging portion and the conductive portion, and as shown in the figure, the contour of the laser weld joint has no thermal cracks.

The above experimental comparison shows that if the compaction rate exceeds 6%, the problem of thermal cracks in the contour of the laser weld joint is significantly relieved; and if the compaction rate exceeds 12%, the contour line of the laser weld can basically be free of thermal cracks.

The present application also provides a battery 100, which includes the battery cell 102 in any of the above solutions. Since the reliability of the battery cell 102 in the embodiments of the present application is improved, it is beneficial to enhance the reliability of the battery 100. It is to be noted that the battery 100 according to the embodiment of the present application can include a box 101 or cannot include the box 101.

By way of example, the battery 100 further includes a busbar component, and a plurality of battery cells 102 are provided, and at least two are electrically connected via the busbar components. As a result, the plurality of battery cells 102 can be connected in series and/or parallel. For example, if the plurality of battery cells 102 are connected in series, a positive electrode of one battery cell 102 is connected to a negative electrode of the next battery cell 102 by one busbar component, and meanwhile, the negative electrode of the battery cell 102 is connected to the positive electrode of the previous battery cell 102 by another busbar component. For example, the busbar component can be directly or indirectly electrically connected to the terminal post body 21 in the terminal post component 2, thus achieving electrical connection between the battery cell 102 and the busbar component.

The embodiment of the present application also provide an electrical apparatus, which includes the battery 100 in any of the above solutions. The battery 100 is configured to provide electric energy to the electrical apparatus. The electrical apparatus can be any of the devices or systems using the battery 100 as described above. Since the reliability of the battery 100 is improved, it helps enhance the electrical operating performance of electrical apparatus.

With reference to FIG. 13, the welding horn 400 according to one specific embodiment of the present application is described below.

In the welding end 401 of the welding horn 400, the welding teeth 5 are divided through the first linear grooves 61 and the second linear grooves 62; the plurality of first linear grooves 61 are provided and are arranged in parallel, and the plurality of second linear groove 62 are provided and are arranged in parallel; the welding end 401 is elongated, and the length direction of the first linear grooves 61 intersects the length direction of the welding end 401 by 45°; the length direction of the second linear grooves 62 and the length direction of the first linear grooves 61 are in axial symmetry with the width direction of the welding end 401; the plurality of first linear grooves 61 and the plurality of second linear grooves 62 are arranged in a crossing way to define the plurality of rhombic first tooth portions 511, and the whole welding end 401 forms a rhombic grid pattern.

The apex dimension S1 of the first tooth portions 511 in the direction of the spacing between adjacent first linear grooves 61 is 1.6-2 mm; the apex dimension S2 of the first tooth portions 511 in the direction of the spacing between adjacent second linear grooves 62 is 1.6-2 mm; the width W1 of the first linear grooves 61 is 0.2-0.3 mm; the width W2 of the second linear grooves 62 is 0.2-0.3 mm; the tooth height of the first tooth portions 511 is 0.2 mm; the projection spacing between the apex and bottom of the first tooth portions 511 is 0.1-0.2 mm; and the edge of the welding end 401 is chamfered, and the chamfering radius is 1 mm. The welding end 401 is 24 mm in length and 14 mm in width, and the tooth area ratio of the welding end 401 is 40%-50%.

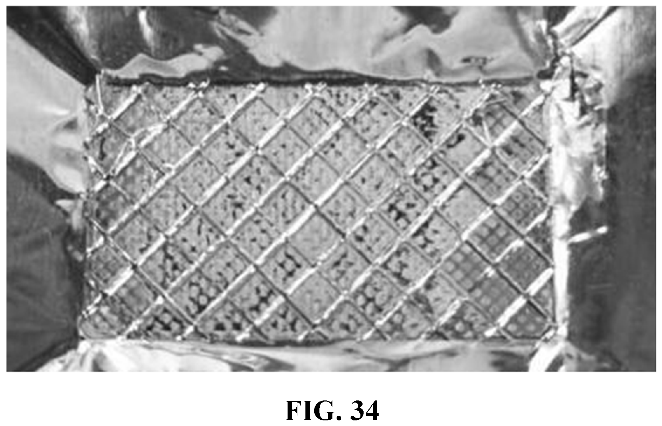

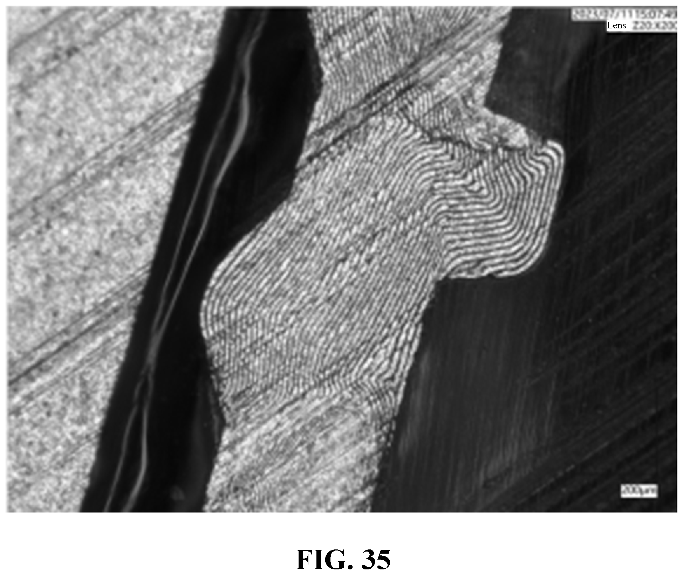

The morphology and cross section of the ultrasonic weld mark machined with this welding horn 400 are shown in FIG. 34 to FIG. 35; the area ratio of the compacted region 3211 relative to the welding end 401 is 40%-50%; the compaction rate of the compacted region 3211 can reach 15%-20%; and there is almost no interlayer gap within the compacted region 3211.

With reference to FIG. 14, the welding horn 400 according to one specific embodiment of the present application is described below.

In the welding end 401 of the welding horn 400, the welding teeth 5 are divided through the first linear grooves 61 and the second linear grooves 62; the plurality of first linear grooves 61 are provided and are arranged in parallel, and the plurality of second linear groove 62 are provided and are arranged in parallel; the welding end 401 is elongated, and the length direction of the first linear grooves 61 intersects the width direction of the welding end 401, the length direction of the second linear grooves 62 is parallel to the length direction of the welding end 401, and the plurality of first linear grooves 61 and the plurality of second linear grooves 62 are arranged in a crossing way to define a plurality of rectangular second tooth portions 512; and the whole welding end 401 forms a matts-shaped pattern.

The apex dimension S3 of the second tooth portions 512 in the direction of the spacing between the first linear grooves 61 is 1.5-2.4 mm; the apex dimension S4 of the second tooth portions 512 in the direction of the spacing between the second tooth grooves 62 is 1.5-2.4 mm; the width W1 of the first linear grooves 61 is 0.2-0.4 mm; the width W2 of the second linear grooves 62 is 0.2-0.4 mm; the tooth height of the second tooth portions 512 is 0.2 mm; the projection spacing between the apex and bottom of the second tooth portions 512 is 0.1-0.2 mm; the edge of the welding end 401 is chamfered, and the chamfering radius is 1 mm. The welding end 401 is 24 mm in length and 14 mm in width, and the tooth area ratio of the welding end 401 is 50%-60%.

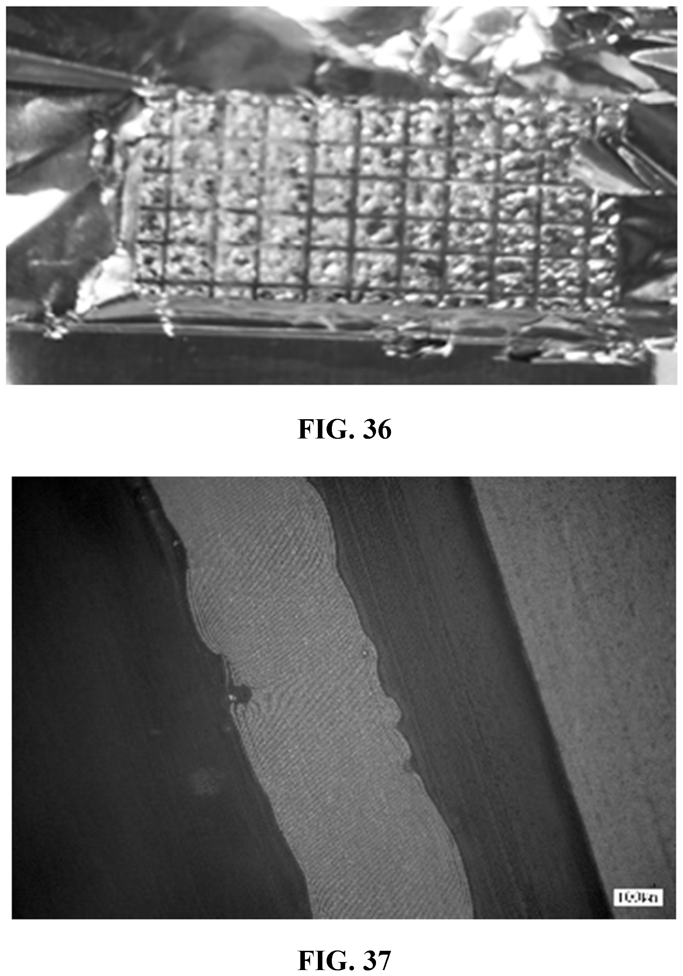

The morphology and cross section of the ultrasonic weld mark machined with this welding horn 400 are shown in FIG. 36 to FIG. 37; the area ratio of the compacted region 3211 relative to the welding end 401 is 50%-60%; and there is almost no interlayer gap within the compacted region 3211.

With reference to FIG. 15, the welding horn 400 according to one specific embodiment of the present application is described below.

In the welding end 401 of the welding horn 400, the welding teeth 5 are divided through the first linear grooves 61 and the second linear grooves 62; the welding end 401 is elongated, and the plurality of first linear grooves 61 are provided and are arranged in parallel, the length direction of the first linear grooves 61 is parallel to the width direction of the welding end 401, the length direction of the second linear grooves 62 is parallel to the length direction of the welding end 401, and the second linear grooves 62 are located at the center of the width of the welding end 401; the plurality of second linear grooves 62 and the plurality of first linear grooves 61 are arranged in a crossing way to define a plurality of elongated third tooth portions 513; and the whole welding end 401 is in a double-row elongated grid shape.

The apex dimension S5 of the third tooth portions 513 in the direction of the spacing between the first linear groove 61 is 2-2.4 mm; the apex dimension S6 of the third tooth portions 513 in the length direction of the first linear grooves 61 is 3.5-4.5 mm; the width W1 of the first linear grooves 61 is 0.2-0.4 mm; the width W2 of the second linear grooves 62 is 0.4-0.6 mm; the tooth height of the third tooth portions 513 is 0.2 mm; the projection spacing between the apex and bottom of the third tooth portions 513 is 0.1-0.2 mm; the edge of the welding end 401 is chamfered, and the chamfering radius is 1.5 mm; and the welding end 401 is 25 mm in length and 13.5 mm in width, and the tooth area ratio of the welding end 401 is 60%-70%.

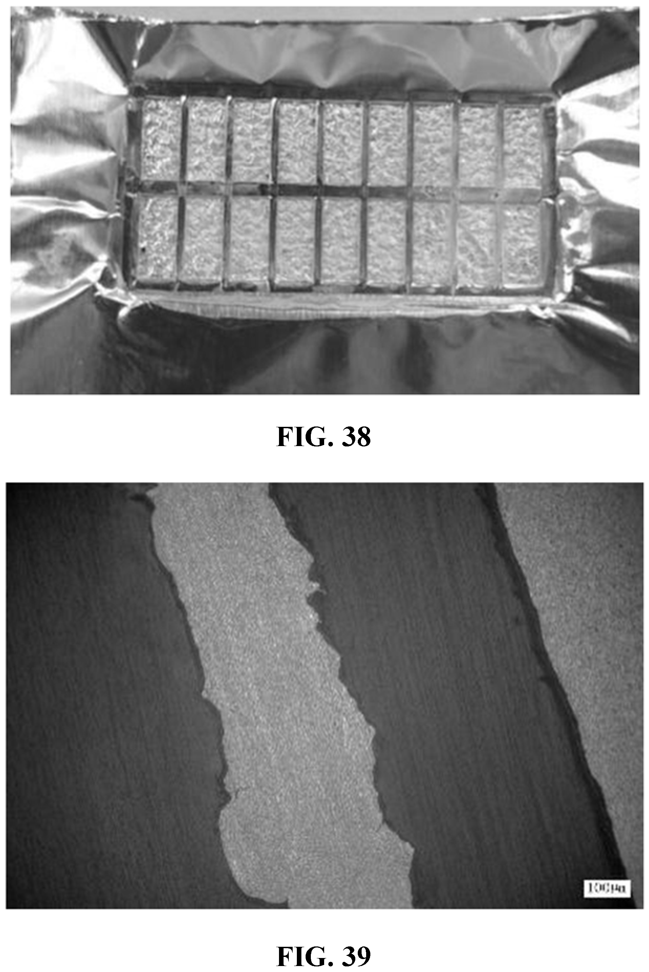

The morphology and cross section of the ultrasonic weld mark machined with this welding horn 400 are shown in FIG. 38 to FIG. 39; the area ratio of the compacted region 3211 relative to the welding end 401 is 60%-70%; and there is almost no interlayer gap within the compacted region.

With reference to FIG. 16, the welding horn 400 according to one specific embodiment of the present application is described below.

In the welding end 401 of the welding horn 400, the welding teeth 5 are divided by the tooth grooves 6 into two fourth tooth portions 514, the plurality of fifth tooth portions 515, and the plurality of sixth tooth portion 516; the contours of the fourth tooth portions 514 are matched with the contours of the fifth tooth portions 515, and the contours of the fourth tooth portions 514 are matched with the contours of the sixth tooth portions 516. The welding end 401 is elongated, the length direction of the fourth tooth portions 514 is matched with the length direction of the welding end 401, and the width direction of the fourth tooth portions 514 is matched with the width direction of the welding end 401; the two fourth tooth portions 514 are arranged at intervals along the width direction of the welding end 401; each long edge of the fourth tooth portions 514 is provided with the plurality of protrusions 5141 arranged at intervals along the length direction of the welding end 401, the protrusions 5141 protrude toward the width direction of the welding end 401, and the plurality of fifth tooth portions 515 are all arranged between the two fourth tooth portions 514 and are arranged at intervals along the length direction of the welding end 401; the protrusions 5141 on the adjacent side of the two fourth toothed portions 514 are opposite to each other, so that two opposite protrusions 5141 are arranged between every two adjacent fifth tooth portions 515; and the plurality of sixth tooth portions 516 are arranged at intervals around the two fourth tooth portions 514.

The sixth tooth portions 516 include the first sub-teeth 5161 located on both sides of the two fourth tooth portions 514 in the width direction of the welding end 401, and the second sub-teeth 5162 located on both sides of the two fourth tooth portions 514 in the length direction of the welding end 401; the plurality of first sub-teeth 5161 are provided and are arranged at intervals along the length direction of the welding end 401, and a plurality of second sub-teeth 5162 are provided and are arranged at intervals along the width direction of the welding end 401; the apex width S10 of the first sub-teeth 5161 in the length direction of the welding end 401 is 1.8-2.2 mm, and the apex width S11 of the second sub-teeth 5162 in the width direction of the welding end 401 is 0.8-1.2 mm.

The ratio of the apex length S7 of the fourth tooth portions 514 in the length direction of the welding end 401 to the length J1 of the welding end 401 is 75%-85%, and the ratio of the apex width S8 of the fourth tooth portions 514 in the width direction of the welding end 401 to half the width J2 of the welding end 401 is 75%-85%; the width of each tooth groove 6 is 0.2-0.4 mm, the tooth height of the fourth tooth portions 514 is 0.25 mm, the projection spacing between the apex and bottom of the fourth tooth portions 514 is 0.1-0.2 mm, and the edge of the welding end 401 is chamfered, and the chamfering radius is 1.5 mm. The welding end 401 is 25 mm in length and 14 mm in width, and the tooth area ratio of the welding end 401 is 70%-80%.

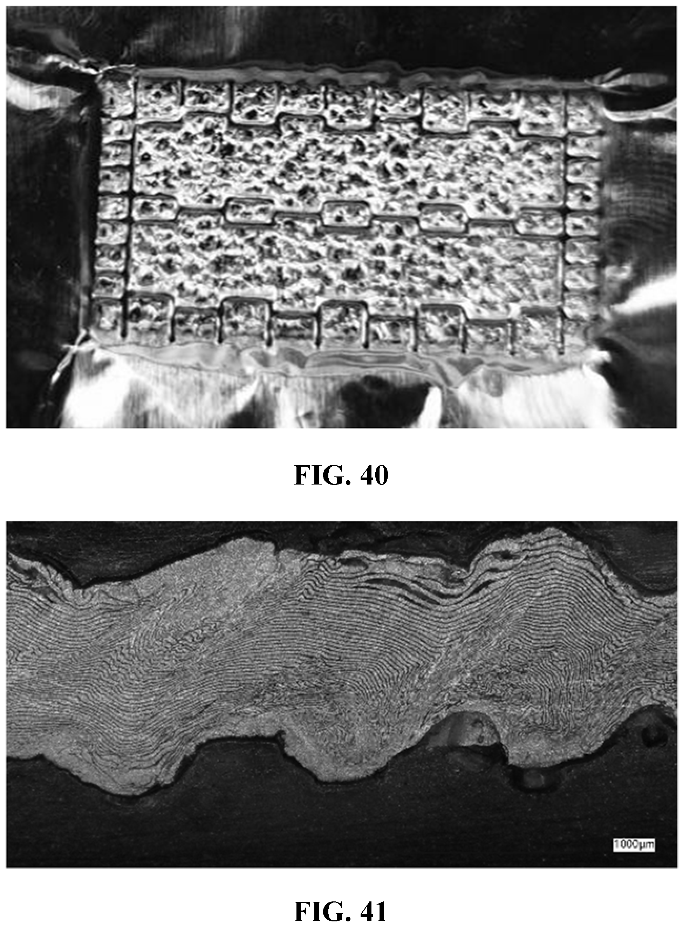

The morphology and cross section of the ultrasonic weld mark machined with this welding horn 400 are shown in FIG. 40 to FIG. 41; the area ratio of the compacted region 3211 relative to the welding end 401 is 70%-80%; and there is almost no interlayer gap within the compacted region 3211.

In this embodiment, a large-diameter pneumatic cylinder is used in match with the welding horn with two large elongated tooth portions, thus the area ratio of the compacted region 3211 to the welding end 401 can be effectively increased; and the plurality of small tooth portions are arranged between and around the two large elongated tooth portions to provide welding grip, thereby firmly gripping the foil during welding and providing greater friction.

In addition, according to the embodiment of the present application, it is also applicable to batteries for 3C application, such as small batteries used in devices like mobile phones; the batteries for 3C application have fewer tab sheet layers and narrower tab widths; the welding horns can be roughened by flat heads with EDM etching or welding teeth with a lower tooth height (for example, tooth height ≤ 0.1mm); for example, power batteries are typically provided with 30-120 layers of tab sheets, with a tab sheet thickness of 13 -15 µm and tooth heights of 0.1-0.4 mm; and the batteries for 3C application are typically provided 10-50 layers of tab sheets, with a tab sheet thickness of 6 -10 µm, ultrasonic weld mark widths of about 5mm, and tooth height less than 0.1mm. The laser welding can be carried out by high-frequency pulsed lasers or low-power continuous lasers, with 60%-100% of the contour line of the laser weld joint line within the compacted region to improve the battery reliability.

During the production of the battery cell, the ultrasonic welding can be carried out, first, the plurality of tab sheets in the tab portion are pre-welded and connected to form the ultrasonic weld mark, and then, the laser welding is carried out to weld the ultrasonic weld mark with the conductive portion of the terminal post component, thereby achieving connection and electric conduction between the electrode assembly and the terminal post component. However, in the relevant technology, the ultrasonic welding machine used for ultrasonic welding, after pre-welding the tab portion, fails to form effective interlayer welding with the ultrasonic weld marks, and there are interlayer gaps between the plurality of tab sheets; the existence of these gaps will cause increase in the number of air pores in the molten pool of the laser weld joint, resulting in degrading of the current-carrying capacity of the battery cell; and during the cooling phase after laser welding, the contour of the laser weld joints develops thermal cracks, which affects the connection reliability and conductive yield between the tab portion and the conductive portion, impacting the performance of the battery cell.

According to the ultrasonic welding apparatus provided in the embodiment of the present application, by increasing the diameter of the pneumatic cylinder, the welding pressure can be increased, the compaction rate after ultrasonic pre-welding can be increased, and the gaps between the tab sheet layers can be decreased; and in combination with the design of the welding teeth of the welding horn, the area of the compacted region can be increased, and the compacted region is optimize, and therefore, the problem of thermal cracks forming in the contour of the laser weld joint is relieved, and the ratio of the air pores in the molten pool of the laser weld joint is decreased, thereby improving the connection reliability and conductive yield between the tab portion and the conductive portion, increasing the current-carrying capacity of the battery cell, as well as enhancing the performance of the battery cell.

It is to be noted that, without conflict, the embodiments in the present application and the features in the embodiments may be combined with each other.

The above descriptions are merely preferred embodiments of the present application and are not intended to limit the present application. For those skilled in the art, the present application may have various modifications and changes. Any modifications, equivalent replacements, improvements, etc. made within the spirit and principle of the present application shall fall within the scope of protection of the present application.

## Claims

1. A welding horn, a welding end of the welding horn being provided with welding teeth and tooth grooves, wherein the welding teeth are divided by the tooth grooves into a plurality of tooth portions spaced apart, and a tooth area ratio of the welding end is greater than or equal to 40%.

2. The welding horn according to claim 1, wherein the tooth grooves comprise first linear grooves and second linear grooves, and the first linear grooves and the second linear grooves are arranged in a crossing way; a plurality of first linear grooves are provided and are arranged in parallel; tooth portions are defined between adjacent first linear grooves and second linear grooves; and widths of the first linear grooves and the second linear grooves are smaller than a spacing between adjacent first linear grooves.

3. The welding horn according to claim 2, wherein the spacing between the adjacent first linear grooves is 1.5-2.5 mm.

4. The welding horn according to claim 2, wherein a plurality of second linear grooves are provided and are arranged in parallel, and the tooth portions are defined between the adjacent first linear grooves and adjacent second linear grooves; and the widths of the first linear grooves and the second linear grooves are smaller than the spacing between adjacent second linear grooves.

5. The welding horn according to claim 4, wherein the spacing between adjacent second linear grooves is 1.5-2.5 mm.

6. The welding horn according to claim 4, wherein the welding end is elongated; a length direction of the first linear grooves intersects the length direction of the welding end at an acute angle, and the length direction of the second linear grooves is in axial symmetry with the length direction of the first linear grooves along a width direction of the welding end, and the tooth area ratio is 40%-50%.

7. The welding horn according to claim 6, wherein the length direction of the first linear grooves intersects the length direction of the welding end at 45°, and the tooth portions comprise first tooth portions defined between adjacent first linear grooves and adjacent second linear grooves; an apex dimension of the first tooth portion in the direction of the spacing between adjacent first linear grooves is 1.6-2 mm; and the apex dimension of the first tooth portion in the direction of the spacing between adjacent second linear grooves is 1.6-2 mm.

8. The welding horn according to claim 4, wherein the welding end is elongated, the length direction of the first linear grooves is parallel to a width direction of the welding end, the length direction of the second linear grooves is parallel to the length direction of the welding end, and the tooth area ratio is 50-60%.

9. The welding horn according to claim 8, wherein the toot portions comprise second tooth portions defined between adjacent first linear grooves and adjacent second linear grooves; the apex dimension of the second tooth portion in the direction of the spacing between the first linear grooves is 1.5-2.4 mm, and the apex dimension of the second tooth portion in the direction of the spacing between the second linear grooves is 1.5-2.4 mm.

10. The welding horn according to claim 2, wherein the welding end is elongated, the length direction of the first linear grooves is parallel to the width direction of the welding end, the length direction of the second linear grooves is parallel to the length direction of the welding end and is in the center of the width of the welding end, and the tooth area ratio is 60-70%.

11. The welding horn according to claim 10, wherein the tooth portions comprise third tooth portions defined between adjacent first linear grooves and adjacent second linear grooves; the apex dimension of the third tooth portion in the direction of the spacing between the first linear grooves is 2-2.4 mm, and the apex dimension of the third tooth portion in the length direction of the first linear grooves is 3.5-4.5 mm.

12. The welding horn according to claim 10, wherein the widths of the first linear grooves is less than that of the second linear grooves.

13. The welding horn according to claim 1, wherein the welding end is elongated, and the welding teeth include fourth tooth portions; the length direction of the fourth tooth portions is matched with the length direction of the welding end, and the width direction of the fourth tooth portions is matched with the width direction of the welding end; and a plurality of fourth tooth portions are provided and are arranged at intervals in the width direction of the welding end.

14. The welding horn according to claim 13, wherein two fourth tooth portions are provided and are arranged at an interval along the width direction of the welding end; a ratio of the apex length of the fourth tooth portions in the length direction of the welding end to the length of the welding end is 75%-85%, and ratio of the apex width of the fourth tooth portions in the width direction of the welding end to half the width of the welding end is 75%-85%, and the tooth area ratio is 70%-80%.

15. The welding horn according to claim 14, wherein each long edge of the fourth tooth portions is provided with a plurality of protrusions arranged at intervals along the length direction of the welding end, and the protrusions protrude toward the width direction of the welding end.

16. The welding horn according to claim 15, wherein the welding teeth also comprise a plurality of fifth tooth portions arranged between two fourth tooth portions and spaced along the length direction of the welding end; the protrusions on adjacent sides of the two fourth tooth portions are opposite to each other, and two opposite protrusions are arranged between every two adjacent fifth tooth portions; and contour lines of the fourth tooth portions are matched with the contour lines of the fifth tooth portions.

17. The welding horn according to claim 15, wherein the welding teeth comprise a plurality of sixth tooth portions which are spaced at intervals around the two fourth tooth portions, and the contour lines of the fourth tooth portions are matched with the contour lines of the sixth tooth portions.

18. The welding horn according to claim 15, wherein the dimension of the protrusions in the length direction of the welding end is 1.5-2.4 mm, and the dimension of the protrusions in the width direction of the welding end is 0.2-1.2 mm.

19. The welding horn according to any one of claims 1 to 18, wherein the width of the tooth grooves is 0.2-0.6 mm.

20. The welding horn according to any one of claims 1 to 19, wherein the apex dimension of the toot portions in a normal direction of the adjacent tooth groove is greater than or equal to 1.5 mm.

21. The welding horn according to any one of claims 1 to 20, wherein a tooth height of the tooth portions is less than or equal to 2.5 mm, and a projection spacing between apex and bottom of each tooth portion is 0.1-0.2 mm.

22. The welding horn according to any one of claims 1 to 21, wherein the edge of the welding end is chamfered, and a chamfering radius is 0.5-2 mm.

23. An ultrasonic welding apparatus, comprising:
a drive cylinder, a welding pad, and the welding horn according to any one of claims 1 to 22, wherein the drive cylinder is arranged on the side of the welding horn away from the welding pad and is configured to drive the welding horn to move toward the welding pad.

24. The ultrasonic welding apparatus according to claim 23, wherein the drive cylinder is a pneumatic cylinder with a diameter greater than 125 mm.

25. The ultrasonic welding apparatus according to claim 24, wherein the diameter of the pneumatic cylinder is 160 mm or 200 mm.

26. A battery cell, comprising:
a case component;
a terminal post component which is arranged in the case component and comprises a conductive portion; and
an electrode assembly which is accommodated in the case component and comprises a tab portion, the tab portion consisting of a plurality of stacked tab sheets which are connected to form a converging portion, and the converging portion overlapping with and connecting to the conductive portion to form a connecting portion; wherein
the converging portion comprises a compacted region, a thickness of the compacted region is less than a stacked thickness of the plurality of tab sheets in the tab portion; the connecting portion comprises a first portion formed on the converging portion; most of a contour line of the first portion is within the compacted region; and the converging portion is processed by the ultrasonic welding apparatus according to any one of claims 23 to 25, and the compacted region is machined through the welding teeth.

27. The battery cell according to claim 26, wherein the connecting portion extends from an outer surface of the converging portion to the conductive portion; the first portion comprises a surface portion formed on the outer surface of the converging portion, and more than 60% of the contour line of the surface portion is within the compacted region.

28. The battery cell according to claim 26 or 27, wherein the compaction rate of the compacted region is greater than or equal to 6%.

29. The battery cell according to claim 28, wherein the compaction rate of the compacted region is greater than or equal to 12%.

30. A battery, comprising the battery cell according to any one of claims 26 to 29.

31. An electrical apparatus, comprising the battery according to claim 30.
